(19) Europäisches Patentamt
European Patent Office
Office européen des brevets

(11) **EP 3 819 890 A1**

(12) **EUROPEAN PATENT APPLICATION**
published in accordance with Art. 153(4) EPC

(43) Date of publication:
**12.05.2021 Bulletin 2021/19**

(51) Int Cl.:
***G08G 1/16*** *(2006.01)*

(21) Application number: **18925518.5**

(22) Date of filing: **04.07.2018**

(86) International application number:
**PCT/IB2018/000812**

(87) International publication number:
**WO 2020/008220 (09.01.2020 Gazette 2020/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NISSAN MOTOR CO., LTD.**
**Yokohama-shi, Kanagawa 221-0023 (JP)**

• **RENAULT s.a.s.**
**92100 Boulogne-Billancourt (FR)**

(72) Inventors:
• **HIRAMATSU, Machiko**
**Atsugi-shi, Kanagawa 243--0123 (JP)**
• **YAMAMURA, Tomohiro**
**Atsugi-shi, Kanagawa 243--0123 (JP)**

(74) Representative: **Grünecker Patent- und
Rechtsanwälte
PartG mbB
Leopoldstraße 4
80802 München (DE)**

(54) **TRAVEL TRAJECTORY GENERATION METHOD AND TRAVEL TRAJECTORY GENERATION DEVICE**

(57) A travel trajectory generation method including: detecting a plurality of risks (71, 72, 73) which are respectively present on one side of a left side and a right side of a host vehicle road that is a road on which a host vehicle (70) travels, the one side being close to the host vehicle, and which are at different front and rear positions ahead of a path of the host vehicle; determining, in accordance with types of the plurality of risks, each of lateral movement amounts (m1, m2, m3) of the host vehicle for avoiding and passing the plurality of risks with clearances from the plurality of risks; and generating a travel trajectory (75) avoiding and passing the plurality of risks at a lateral position moved by an amount equal to or more than a maximum lateral movement (m2) amount among the determined lateral movement amounts.

FIG. 4

## Description

Technical Field

The present invention relates to a travel trajectory generation method and a travel trajectory generation device.

Background Art

A technology described in PTL 1 is known as a technology for controlling a host vehicle to travel so as to avoid an object ahead of the host vehicle.

A driving support device described in PTL 1 sets an amount of lateral movement from the object necessary to avoid the object in accordance with a relative speed of the object with respect to the host vehicle and a type of the object, and controls traveling on the basis of the lateral movement amount and a current traveling state of the host vehicle

Citation List

Patent Literature

PTL 1: JP 2009-286279 A

Summary of Invention

Technical Problem

However, when there are a plurality of objects ahead of a path of the host vehicle, the driving support device described in PTL 1 sets lateral movement amounts respectively different for the objects, due to which steering occurs each time the host vehicle avoids each of the objects, so that smooth avoidance cannot be performed.

An object of the present invention is to, when a plurality of risks are present ahead of the path of a host vehicle, allow the host vehicle to smoothly pass the plurality of risks with clearances from the risks.

Solution to Problem

According to one aspect of the present invention, there is provided a travel trajectory generation method including: detecting a plurality of risks which are respectively present on one side of a left side and a right side of a host vehicle road that is a road on which a host vehicle travels, the one side being close to the host vehicle, and which are at different front and rear positions ahead of a path of the host vehicle; determining, in accordance with types of the plurality of risks, each of lateral movement amounts of the host vehicle for avoiding and passing the plurality of risks with clearances from the plurality of risks; and generating a travel trajectory avoiding and passing the plurality of risks at a lateral position moved by an amount equal to or more than a maximum lateral movement amount among the determined lateral movement amounts.

Advantageous Effects of Invention

According to the aspect of the present invention, it is possible to, when a plurality of risks are present ahead of the path of a host vehicle, allow the host vehicle to smoothly pass the plurality of risks with clearances from the risks.

The object and advantages of the invention will be realized and attained by means of the elements and combinations particularly pointed out in the claims. It is to be understood that both the foregoing general description and the following detailed description are exemplary and explanatory and are not restrictive of the invention.

Brief Description of Drawings

FIG. 1 is a diagram illustrating a schematic structural example of a driving support device including a travel trajectory generation device of an embodiment;
FIG. 2 is a diagram illustrating an example of a plurality of risks present ahead of the path of a host vehicle;
FIG. 3 is a diagram illustrating one example of lateral movement amounts for avoiding and passing the plurality of risks with clearances from the risks;
FIG. 4 is a diagram illustrating one example of a travel trajectory generated by the travel trajectory generation device of the first embodiment;
FIG. 5 is a block diagram illustrating one example of a functional structure of a controller of FIG. 1 in the first embodiment;
FIG. 6 is a flowchart illustrating one example of a driving support method of the first embodiment;
FIG. 7 is a diagram illustrating a first example of a travel trajectory generated by a travel trajectory generation device of a second embodiment;
FIG. 8 is a diagram illustrating a second example of the travel trajectory generated by the travel trajectory generation device of the second embodiment;
FIG. 9 is a block diagram illustrating one example of a functional structure of the controller of FIG. 1 in the second embodiment;
FIG. 10 is a flowchart illustrating one example of a driving support method of the second embodiment;
FIG. 11 is a diagram illustrating a first example of a travel trajectory generated by a travel trajectory generation device of a third embodiment;
FIG. 12 is a diagram illustrating a second example of the travel trajectory generated by the travel trajectory generation device of the third embodiment;
FIG. 13 is a diagram illustrating a third example of the travel trajectory generated by the travel trajectory generation device of the third embodiment;

FIG. 14 is a diagram illustrating a fourth example of the travel trajectory generated by the travel trajectory generation device of the third embodiment;

FIG. 15 is a diagram illustrating a fifth example of the travel trajectory generated by the travel trajectory generation device of the second embodiment;

FIG. 16 is a diagram illustrating a sixth example of the travel trajectory generated by the travel trajectory generation device of the third embodiment;

FIG. 17 is a diagram illustrating a seventh example of the travel trajectory generated by the travel trajectory generation device of the third embodiment;

FIG. 18 is a flowchart illustrating one example of a driving support method of the third embodiment;

FIG. 19 is a flowchart illustrating one example of a second travel trajectory generation process of FIG. 18;

FIG. 20 is a flowchart illustrating one example of a third travel trajectory generation process of FIG. 18; and

FIG. 21 is a diagram illustrating one example of a travel trajectory generated by a travel trajectory generation device of a modification.

Description of Embodiments

Hereinafter, embodiments of the present invention will be described with reference to the drawings.

(First Embodiment)

(Structure)

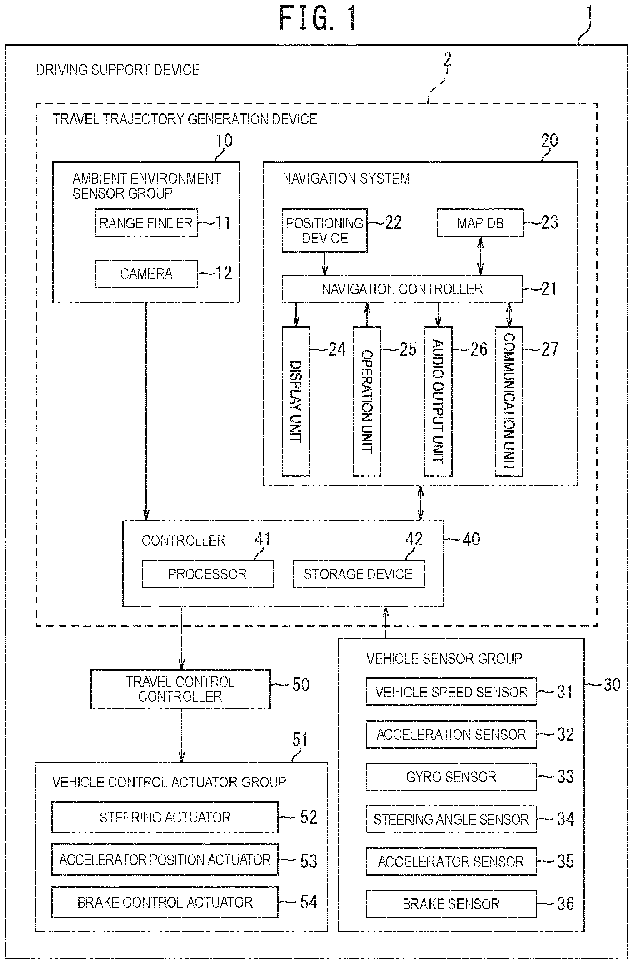

Reference will be made to FIG. 1. On the basis of a traveling environment around a vehicle (hereinafter referred to as "host vehicle") mounted with a driving support device 1, the driving support device 1 performs a traveling support control for automatically steering or stopping the host vehicle and an automatic driving control for automatically driving the host vehicle without involvement of a driver.

The driving support device 1 includes an ambient environment sensor group 10, a navigation system 20, a vehicle sensor group 30, a controller 40, a travel control controller 50, and a vehicle control actuator group 51.

The ambient environment sensor group 10 is a sensor group configured to detect ambient environments of the host vehicle, for example, objects around the host vehicle. The ambient environment sensor group 10 may include a range finder 11 and a camera 12. The range finder 11 and the camera 12 detect the ambient environments of the host vehicle, such as objects present around the host vehicle, relative positions between the host vehicle and the objects, and distances between the host vehicle and the objects.

The range finder 11 may be, for example, a laser range-finder (LRF) or a radar.

The camera 12 may be, for example, a stereo camera. The camera 12 may be a monocular camera, through which the same object may be photographed from a plurality of viewpoints to calculate a distance to the object.

The range finder 11 and the camera 12 output ambient environment information, which is information on detected ambient environments, to the controller 40.

The navigation system 20 recognizes a current position of the host vehicle and road map information at the current position. The navigation system 20 sets a travel route to a destination input by a vehicle occupant, and gives a route guidance to the vehicle occupant according to the travel route. Furthermore, the navigation system 20 outputs information on the set travel route to the controller 40.

When the traveling state of the host vehicle is an automatic driving mode, the controller 40 automatically drives the host vehicle so as to travel along the travel route set by the navigation system 20.

The navigation system 20 includes a navigation controller 21, a positioning device 22, a map database 23, a display unit 24, an operation unit 25, an audio output unit 26, and a communication unit 27. Note that, in FIG. 1, map database is referred to as map DB.

The navigation controller 21 is an electronic control unit configured to control information processing operation of the navigation system 20. The navigation controller 21 includes a processor and peripheral components thereof. The processor may be, for example, a central processing unit (CPU) or a micro-processing unit (MPU).

The peripheral components include a storage device and the like. The storage device may include any of a semiconductor storage device, a magnetic storage device, and an optical storage device. The storage device may include memories, such as register, cache memory, and read only memory (ROM) and random access memory (RAM) used as primary storage devices.

The positioning device 22 measures the current position of the host vehicle. The positioning device 22 may be, for example, a global positioning system (GPS) receiver. The positioning device 22 may measure the current position of the host vehicle on the basis of a satellite signal of another satellite positioning system, such as a global navigation satellite system (GLONASS). Alternatively, the positioning device 22 may be an inertial navigation device.

The map database 23 stores road map data. The road map data includes information on road line types, road shapes, slopes, the number of lanes, legal speeds (speed limits), road widths, priority regulations for designating priority roads, stop regulations for designating a stop sign and the like, and the presence or absence of junctions. The road line types include, for example, ordinary roads and highways.

The display unit 24 outputs various pieces of visual information in the navigation system 20. For example, the display unit 24 may display a map screen around the host vehicle and guidance on a recommended route.

In the navigation system 20, the operation unit 25 receives operation by the vehicle occupant. The operation unit 25 may be, for example, a button, a dial, a slider, or the like, or may be a touch panel provided on the display unit 24. For example, the operation unit 25 may receive an operation for inputting a destination and an operation for switching the display screen of the display unit 24 by the vehicle occupant.

The audio output unit 26 outputs various pieces of audio information in the navigation system 20. The audio output unit 26 may output a driving guidance on the basis of the set travel route and road guidance information on the basis of the road map data around the host vehicle.

The communication unit 27 performs wireless communication with a communication device outside the host vehicle. A communication system by the communication unit 27 may be, for example, wireless communication by a public mobile phone network, vehicle-to-vehicle communication, road-to-vehicle communication, or satellite communication. The navigation system 20 may acquire the road map data from an external device through the communication unit 27.

The vehicle sensor group 30 includes sensors configured to detect a traveling state of the host vehicle and sensors configured to detect a driving operation performed by a driver.

The sensors configured to detect the traveling state of the host vehicle include a vehicle speed sensor 31, an acceleration sensor 32, and a gyro sensor 33.

The sensors configured to detect a driving operation include a steering angle sensor 34, an accelerator sensor 35, and a brake sensor 36.

The vehicle speed sensor 31 detects a wheel speed of the host vehicle, and calculates a speed of the host vehicle on the basis of the wheel speed.

The acceleration sensor 32 detects an acceleration in a longitudinal direction of the host vehicle, an acceleration in a vehicle widthwise direction thereof, and an acceleration in a vertical direction thereof.

The gyro sensor 33 detects an angular velocity of a rotation angle of the host vehicle about three axes including a roll axis, a pitch axis, and a yaw axis.

The steering angle sensor 34 detects a current steering angle that is a current rotation angle (steering operation amount) of a steering wheel serving as a steering operation element.

The accelerator sensor 35 detects an accelerator position of the host vehicle. For example, the accelerator sensor 35 detects, as the accelerator position, a depression amount of an accelerator pedal of the host vehicle.

The brake sensor 36 detects an amount of brake operation by the driver. For example, the brake sensor 36 detects, as the amount of brake operation, a depression amount of a brake pedal of the host vehicle.

Information on the speed, acceleration, angular velocity, steering angle, accelerator position, and brake operation amount of the host vehicle detected by the respective sensors of the vehicle sensor group 30 is collectively referred to as "sensor information". The vehicle sensor group 30 outputs the sensor information to the controller 40.

The controller 40 is an electronic control unit configured to perform driving support of the host vehicle. The controller 40 includes a processor 41 and peripheral components such as a storage device 42. The processor 41 may be, for example, a CPU or an MPU.

The storage device 42 may include any of a semiconductor storage device, a magnetic storage device, and an optical storage device. The storage device 42 may include memories such as register, cache memory, and ROM and RAM used as primary storage.

Note that the controller 40 may be embodied by a functional logic circuit set in a general-purpose semiconductor integrated circuit. For example, the controller 40 may include a programmable logic device (PLD), such as a field-programmable gate array (FPGA), or the like.

The controller 40 generates a travel trajectory to cause the host vehicle to travel on the travel route set by the navigation system 20, on the basis of the ambient environment information input from the ambient environment sensor group 10 and the sensor information input from the vehicle sensor group 30.

The controller 40 outputs the generated travel trajectory to the travel control controller 50.

The ambient environment sensor group 10, the navigation system 20, the vehicle sensor group 30, and the controller 40 form a travel trajectory generation device 2 configured to generate a travel trajectory on which the host vehicle is caused to travel.

The travel control controller 50 is an electronic control unit configured to perform driving control of the host vehicle. The travel control controller 50 includes a processor and peripheral components such as a storage device. The processor may be, for example, a CPU or an MPU.

The storage device may include any of a semiconductor storage device, a magnetic storage device, and an optical storage device. The storage device may include memories such as register, cache memory, and ROM and RAM used as primary storage.

Note that the travel control controller 50 may be embodied by a functional logic circuit set in a general-purpose semiconductor integrated circuit. For example, the travel control controller 50 may include a PLD such as a FPGA, or the like.

The travel control controller 50 drives the vehicle control actuator group 51 such that the host vehicle travels on the travel trajectory generated by the controller 40, thereby causing the host vehicle to automatically travel.

The vehicle control actuator group 51 operates the steering wheel of the host vehicle, the accelerator position thereof, and a braking device thereof in response to a control signal from the controller 40 to cause a vehicle behavior of the host vehicle to occur. The vehicle control actuator group 51 includes a steering actuator 52, an accelerator position actuator 53, and a brake control actuator 54.

The steering actuator 52 controls a steering direction and a steering amount of a steering of the host vehicle.

The accelerator position actuator 53 controls the accelerator position of the host vehicle.

The brake control actuator 54 controls brake operation of the braking device of the host vehicle.

Next, a description will be given of a travel trajectory generated by the travel trajectory generation device 2 when there is a risk ahead of a path of the host vehicle.

In the present specification, the "risk" includes an avoidance object to be avoided by the host vehicle and a separation object to be passed through while being avoided with a clearance from the host vehicle. For example, the risk may include an obstacle present on a host vehicle road that is a road on which the host vehicle travels. Such an obstacle is the avoidance object to be avoided by the host vehicle, and includes a parked vehicle, a stopped vehicle, a pedestrian, a two-wheeled vehicle, and a temporarily built object or a fallen object on the road. Additionally, "to avoid and pass a risk" means to pass while securing a safe predetermined distance (with a clearance) from the risk in a widthwise direction of the host vehicle road. Note that, in the following description, it will be simply referred to as "pass risk(s)" for the sake of simplicity.

Additionally, for example, the risk may include a junction at which an intersection road that intersects with the host vehicle road ahead of the path of the host vehicle merges to the host vehicle road (an exit of the intersection road to the host vehicle road) . This is because when passing through the junction at which the intersection road merges to the host vehicle road, the host vehicle passes through the intersection with a clearance from the intersection road in consideration of a possibility that another vehicle may enter from the intersection road to the host vehicle road. For the same reason, a parking lot exit that faces the host vehicle road may also be a risk. Note that, in the following description, the junction at which the intersection road intersecting with the host vehicle road merges to the host vehicle road (the exit of the intersection road to the host vehicle road) will also be simply referred to as "intersection road" for the sake of simplicity).

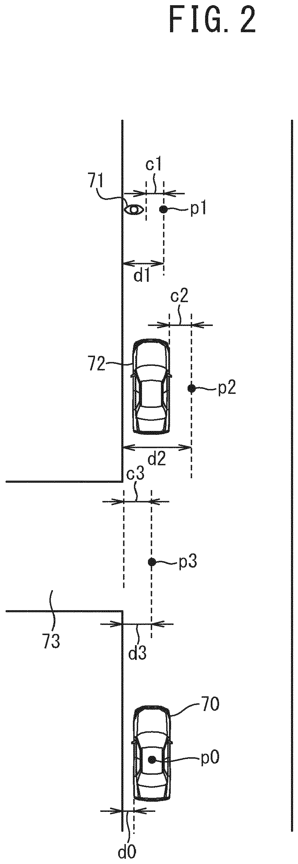

Reference will be made to FIG. 2. The travel trajectory generation device 2 detects each of a plurality of risks 71, 72, and 73 which are respectively present on one side of a left side and a right side of a host vehicle road where a host vehicle 70 travels, the one side being close to the host vehicle 70, and which are at different front and rear positions ahead of a path of the host vehicle 70. For example, the risk 71 is a pedestrian, the risk 72 is a parked vehicle, and the risk 73 is an intersection road that intersects with the host vehicle road ahead of the path of the host vehicle.

The present specification describes a case where vehicles keep left. In this case, the one side closer to the host vehicle 70 out of the left and right sides of the host vehicle road is the left side, whereas the other side far from the host vehicle 70 is the right side.

However, the present invention is also applicable to a case where vehicles keep right. In this case, the one side closer to the host vehicle 70 out of the left and right sides of the host vehicle road is the right side, whereas the other side far from the host vehicle 70 is the left side.

When there is a risk ahead of the path of the host vehicle, the travel trajectory generation device 2 generates a travel trajectory passing the risk with a space (clearance) from the risk.

The magnitude of the clearance is previously determined in accordance with type of the risk. Reference signs c1, c2, and c3, respectively, denote clearances to be provided for the pedestrian 71, the parked vehicle 72, and the intersection road 73.

In addition, reference sign d1 denotes a distance between a lateral position p1 away from the pedestrian 71 by a clearance c1 and a road boundary on the left side of the host vehicle road. Similarly, reference sign d2 denotes a distance between a lateral position p2 away from the parked vehicle 72 by a clearance c2 and the road boundary on the left side of the host vehicle road. Reference sign d3 denotes a distance between a lateral position p3 away from the intersection road 73 by a clearance c3 and the road boundary on the left side of the host vehicle road.

Furthermore, reference sign d0 denotes a distance between a left end portion of the host vehicle 70 when the host vehicle 70 is present at a current lateral position p0 and the road boundary on the left side of the host vehicle road.

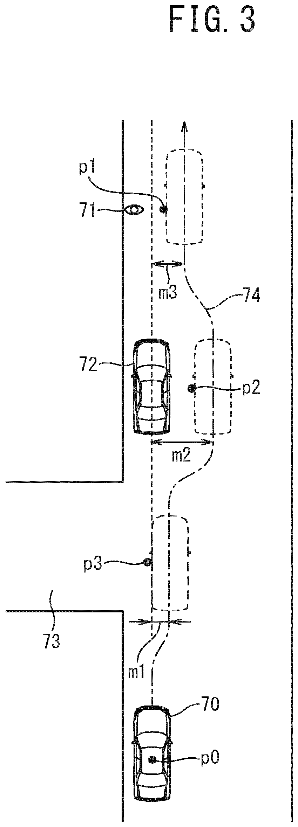

Reference will be made to FIG. 3. The travel trajectory generation device 2 determines lateral movement amounts m1, m2, and m3 from the current lateral position p0 of the host vehicle for passing the pedestrian 71, the parked vehicle 72, and the intersection road 73 with the respective clearances c1, c2, and c3 from the pedestrian 71, the parked vehicle 72, and the intersection road 73 by the following equations:

$$m1 = (d1 - d0)$$

$$m2 = (d2 - d0)$$

$$m3 = (d3 - d0)$$

The lateral movement amounts m1 to m3 are determined in accordance with the type, position, and magnitude of the risk. For example, the travel trajectory generation device 2 determines lateral movement amounts having a magnitude relationship among the pedestrian, the two-wheeled vehicle, the parked vehicle, the intersection road, and the parking lot exit as follows: (lateral movement amount with respect to parked vehicle) > (lateral movement amount with respect to two-wheeled vehicle) > (lateral movement amount with respect to pedestrian) > (lateral movement amount with respect to intersection road) > (lateral movement amount with respect to parking lot exit)

Next, the travel trajectory generation device 2 generates a travel trajectory passing the pedestrian 71, the parked vehicle 72, and the intersection road 73 with clearances from the pedestrian 71, the parked vehicle 72, and the intersection road 73 on the basis of the calculated lateral movement amounts m1 to m3.

Herein, when the travel trajectory generation device 2 generates a travel trajectory 74 such that lateral positions of the left end portions of the host vehicle 70 when passing the intersection road 73, the parked vehicle 72, and the pedestrian 71 become p3, p2, and p1, respectively, steering occurs each time the host vehicle 70 passes each of the risks 71 to 73, as illustrated in FIG. 3, so that smooth passage cannot be performed.

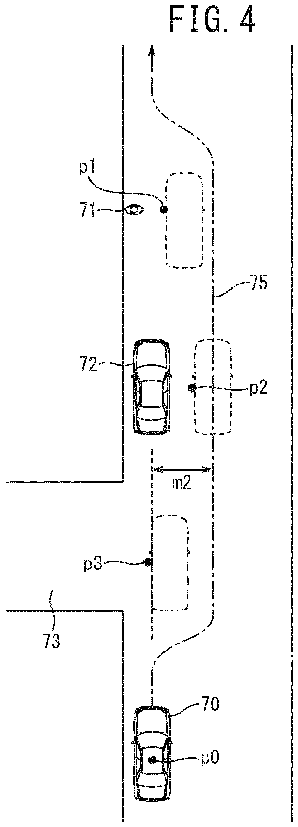

Thus, the travel trajectory generation device 2 generates a travel trajectory passing all of the pedestrian 71, the parked vehicle 72, and the intersection road 73 while maintaining a lateral position moved by the maximum lateral movement amount m2 among the determined lateral movement amounts m1 to m3. FIG. 4 illustrates an example of such a travel trajectory 75. Note that the travel trajectory generation device 2 may generate a travel trajectory passing at a lateral position moved longer than the lateral movement amount m2.

Hereinafter, a travel trajectory passing all of the plurality of risks while maintaining a lateral position moved by an amount equal to or more than the maximum lateral movement amount among the lateral movement amounts determined with respect to the plurality of risks may be referred to as "extended passage trajectory".

Traveling along such an extended passage trajectory 75 can reduce the frequency of steering of the host vehicle when passing the intersection road 73, the parked vehicle 72, and the pedestrian 71, so that smooth passage can be performed.

In the example of FIG. 4, only a one-time avoidance steering for increasing lateral clearances from the risks 71 to 73 before passing the intersection road 73 and a one-time return steering for returning to an original lateral position after passing the pedestrian 71 occur, so that smooth passage can be performed.

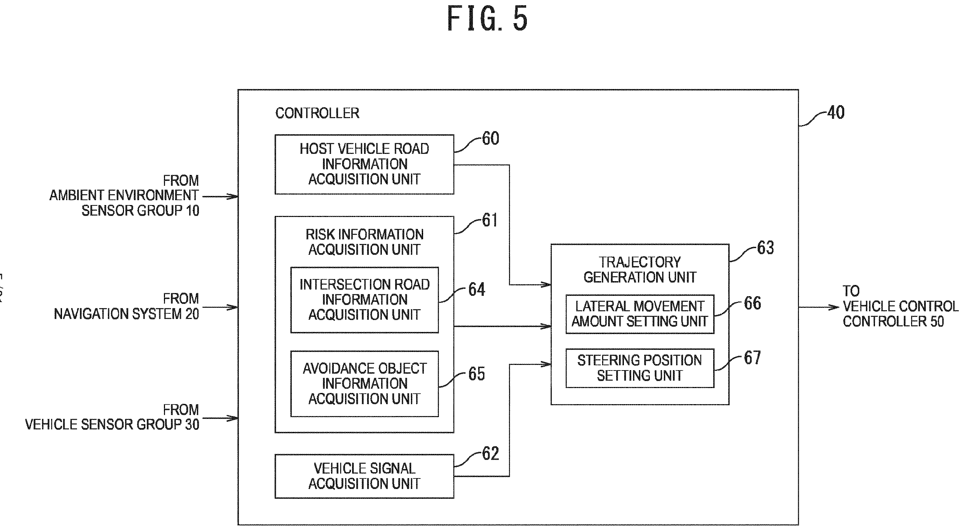

A functional structure of the controller 40 in the first embodiment will be described with reference to FIG. 5. The controller 40 includes a host vehicle road information acquisition unit 60, a risk information acquisition unit 61, a vehicle signal acquisition unit 62, and a trajectory generation unit 63. Functions of the host vehicle road information acquisition unit 60, the risk information acquisition unit 61, the vehicle signal acquisition unit 62, and the trajectory generation unit 63 may be implemented, for example, by causing the processor 41 of the controller 40 to execute a computer program stored in the storage device 42.

The host vehicle road information acquisition unit 60 receives the ambient environment information output from the ambient environment sensor group 10 and the road map data provided from the navigation system 20.

The host vehicle road information acquisition unit 60 acquires host vehicle road information that is information of the host vehicle road that is a road on which the host vehicle 70 travels, from the ambient environment information and the road map data. The host vehicle road information may include, for example, a road line type, a road shape, a slope, the number of lanes, a legal speed (speed limit), a road width, a priority regulation, and a stop regulation of the host vehicle road.

The host vehicle road information acquisition unit 60 outputs the host vehicle road information to the trajectory generation unit 63.

The risk information acquisition unit 61 receives the ambient environment information output from the ambient environment sensor group 10 and the road map data provided from the navigation system 20.

The risk information acquisition unit 61 detects the plurality of risks respectively present on the left side of the host vehicle road and at different front and rear positions ahead of the path of the host vehicle 70 from the ambient environment information and the road map data, and acquires risk information that is information of the plurality of risks.

The risk information acquisition unit 61 includes an intersection road information acquisition unit 64 and an avoidance object information acquisition unit 65.

The intersection road information acquisition unit 64 detects the intersection road that intersects with the host vehicle road on the left side of the host vehicle road and ahead of the path of the host vehicle 70 on the basis of the ambient environment information and the road map data, and acquires, as risk information, intersection road information that is information of the detected intersection road. The intersection road information may include, for example, a position, a road width, a priority regulation, and a stop regulation of the intersection road. The intersection road information also includes information of the parking lot exit that faces the host vehicle road.

The avoidance object information acquisition unit 65 detects avoidance objects (for example, a parked vehicle, a stopped vehicle, a pedestrian, a two-wheeled vehicle, and a temporarily built object or a fallen object on the road) present on the left side of the host vehicle road and ahead of the path of the host vehicle 70 from the ambient environment information, and acquires, as risk information, avoidance object information that is information of the detected avoidance objects. The avoidance object information may include information such as positions, lateral widths, types and the like of the avoidance objects.

The risk information acquisition unit 61 outputs the intersection road information and the avoidance object information to the trajectory generation unit 63.

The vehicle signal acquisition unit 62 acquires a vehicle signal that is information of the host vehicle 70 from the sensor information output from the vehicle sensor group 30 and current position information of the host vehicle 70 provided from the navigation system 20. The vehicle signal may be a signal that indicates, for example, a speed and a current position of the host vehicle. The vehicle signal acquisition unit 62 outputs the vehicle signal to the trajectory generation unit 63.

The trajectory generation unit 63 generates a travel trajectory on which the host vehicle is caused to travel on the basis of the ambient environment information output from the ambient environment sensor group 10, the road map data provided from the navigation system 20, the travel route set by the navigation system 20, the host vehicle road information, the intersection road information, the avoidance object information, and the vehicle signal.

When the risks are detected on the left side of the host vehicle road and ahead of the path of the host vehicle 70, the trajectory generation unit 63 generates a travel trajectory passing the detected risks with clearances from the risks. The trajectory generation unit 63 includes a lateral movement amount setting unit 66 and a steering position setting unit 67.

The lateral movement amount setting unit 66 calculates lateral movement amounts for maintaining clearances from the detected risks. The steering position setting unit 67 sets a steering start position of a steering for passing the detected risks by moving by a set lateral movement amount.

The trajectory generation unit 63 generates a travel trajectory passing the risks on the basis of the calculated lateral movement amounts and the set steering start position. The trajectory generation unit 63 outputs the generated travel trajectory to the travel control controller 50.

When the plurality of risks 71 to 73, respectively, are detected at different front and rear positions, the lateral movement amount setting unit 66 determines each of the lateral movement amounts m1 to m3 of the host vehicle 70 for passing the plurality of risks 71 to 73 with the clearances c1 to c3 from the plurality of risks 71 to 73 in accordance with lateral positions and types of the plurality of risks 71 to 73.

The lateral movement amount setting unit 66 selects the maximum lateral movement amount m2 from among the determined lateral movement amounts m1 to m3.

The steering position setting unit 67 sets a steering start position for passing all of the plurality of risks 71 to 73 at a lateral position moved by the maximum lateral movement amount m2 or more. The steering start position includes a start position of an avoidance steering for increasing lateral clearances from the plurality of risks 71 to 73 before the plurality of risks 71 to 73 and a start position of a return steering for returning to the original lateral position after passing all of the plurality of risks 71 to 73.

The trajectory generation unit 63 generates the extended passage trajectory 75 that passes all of the plurality of risks 71 to 73 at a lateral position moved by the maximum lateral movement amount m2 or more on the basis of the set steering start position and the maximum lateral movement amount m2.

(Operation)

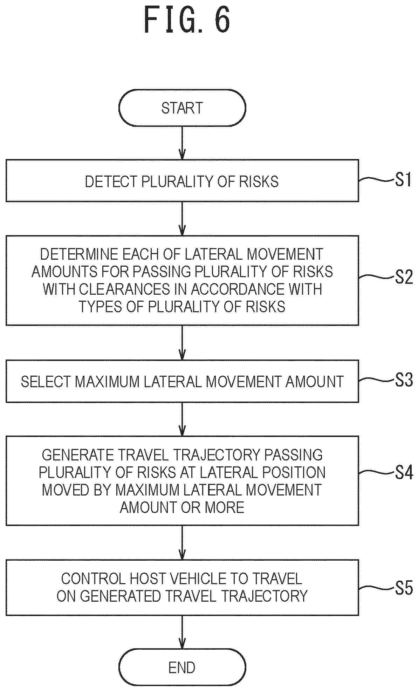

Next, operation of the driving support device 1 in the first embodiment will be described. Reference will be made to FIG. 6.

At step S1, the risk information acquisition unit 61 detects the plurality of risks 71 to 73, respectively, present on the left side of the host vehicle road and at the different front and rear positions ahead of the path of the host vehicle 70.

At step S2, the lateral movement amount setting unit 66 determines each of the lateral movement amounts m1 to m3 of the host vehicle 70 for passing the plurality of risks 71 to 73 with the clearances c1 to c3 from the plurality of risks 71 to 73 in accordance with types of the plurality of risks 71 to 73.

At step S3, the lateral movement amount setting unit 66 selects the maximum lateral movement amount m2 from among the determined lateral movement amounts m1 to m3.

At step S4, the trajectory generation unit 63 generates the extended passage trajectory 75 passing all of the plurality of risks 71 to 73 at a lateral position moved by the maximum lateral movement amount m2 or more.

At step S5, the travel control controller 50 drives the vehicle control actuator group 51 such that the host vehicle 70 travels on the extended passage trajectory 75 generated by the trajectory generation unit 63, thereby causing the host vehicle 70 to automatically travel.

(Effects of First Embodiment)

The risk information acquisition unit 61 detects the plurality of risks 71 to 73, respectively, present on the left side of the host vehicle road and at the different front and rear positions ahead of the path of the host vehicle 70. The lateral movement amount setting unit 66 determines each of the lateral movement amounts m1 to m3 of the host vehicle 70 for passing the plurality of risks 71 to 73 with the clearances c1 to c3 from the plurality of risks 71 to 73 in accordance with types of the plurality of risks 71 to 73. The trajectory generation unit 63 generates the extended passage trajectory that passes all of the plurality of risks 71 to 73 at a lateral position moved by the maximum lateral movement amount m2 or more.

Generating such an extended passage trajectory can reduce the frequency of steering of the host vehicle when passing the plurality of risks 71 to 73, so that smooth passage can be performed.

(Second Embodiment)

Next, a second embodiment will be described. When a detected plurality of risks are away from each other by a distance, it is not preferable to continue to travel on a section between the risks while maintaining the lateral position even after passing the preceding risk (i.e., without moving to one side of the road).

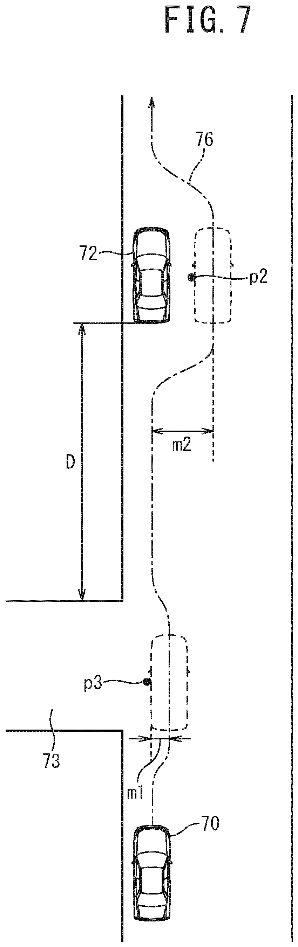

For example, FIG. 7 illustrates a case where a distance D between the intersection road 73 that is one of the plurality of risks and the parked vehicle 72 that is the other one of the plurality of risks is long. In such a case, it is not preferable to continue to travel on a section between the intersection road 73 and the parked vehicle 72 while maintaining a lateral position moved by the lateral movement amount m2 or more.

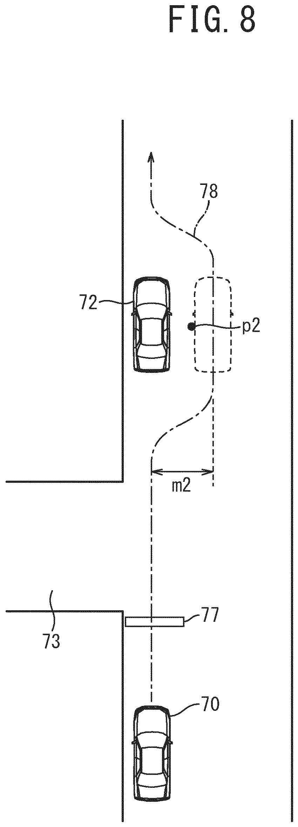

Additionally, when the host vehicle road does not have priority over the intersection road 73 (when the host vehicle road is not a priority road), the host vehicle 70 temporarily stops before entering the intersection. For example, FIG. 8 illustrates a case where a temporary stop line 77 is provided and the host vehicle road does not have priority over the intersection road 73. In such a case, since the host vehicle 70 stops at the temporary stope line 77, it is unnecessary to increase the clearance from the intersection road 73 to pass through the intersection.

Still furthermore, when it is previously known that there is no other vehicle that enters the host vehicle road from the intersection road 73, it is also unnecessary to increase the clearance from the intersection road 73 to pass through the intersection.

Accordingly, the travel trajectory generation device 2 of the second embodiment determines whether or not to generate an extended passage trajectory on the basis of a positional relationship between the intersection road that is one of the plurality of risks and the other risk of the plurality of risks.

For example, when the distance D between the intersection road 73 and the parked vehicle 72 is within a predetermined range, an extended passage trajectory that passes the intersection road 73 and the parked vehicle 72 is generated.

On the other hand, when the distance D is not within the predetermined range, a travel trajectory 76 is generated in which a travel trajectory passing with the clearance c3 from the intersection road 73 and a travel trajectory passing with the clearance c2 from the parked vehicle 72 are separately formed, as illustrated in FIG. 7.

Additionally, when the host vehicle road has priority over the intersection road 73, an extended passage trajectory passing the intersection road 73 and the parked vehicle 72 is generated.

On the other hand, when the host vehicle road does not have priority over the intersection road 73, a travel trajectory passing the parked vehicle 72 by increasing only the clearance from the parked vehicle 72 is generated, as illustrated in FIG. 8.

Similarly, when there is another vehicle that enters the host vehicle road from the intersection road 73, an extended passage trajectory passing both the intersection road 73 and the parked vehicle 72 is generated.

On the other hand, when there is no other vehicle that enters the host vehicle road from the intersection road 73, a travel trajectory passing the parked vehicle 72 by increasing only the clearance from the parked vehicle 72 is generated.

Note that FIGS. 7 and 8 illustrate a case where the intersection road 73 is present ahead of the path of the host vehicle 70 and is closer to the host vehicle 70 than the other risk 72. However, the same applies to a case where the intersection road 73 is present ahead of the path of the host vehicle 70 and is farther from the host vehicle 70 than the other risk 72.

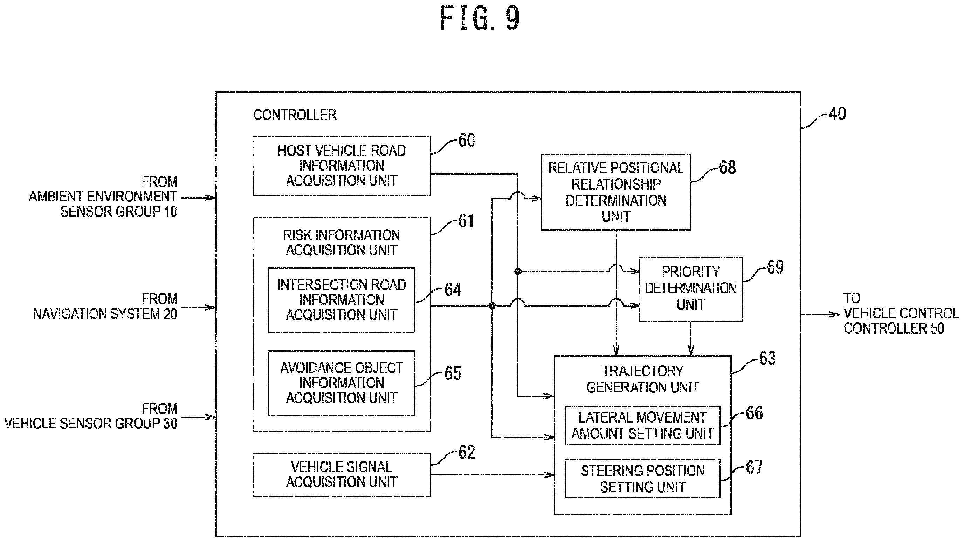

A functional structure of the controller 40 in the second embodiment will be described with reference to FIG. 9. The same constituent elements as those of the first embodiment are denoted by the same reference signs, and description of the same functions is omitted.

The controller 40 includes a relative positional relationship determination unit 68 and a priority determination unit 69. Functions of the relative positional relationship determination unit 68 and the priority determination unit 69 may be implemented, for example, by causing the processor 41 of the controller 40 to execute a computer program stored in the storage device 42.

The relative positional relationship determination unit 68 receives positional information of the intersection road that is one of the plurality of risks respectively present on the left side of the host vehicle road and at the different front and rear positions ahead of the path of the host vehicle 70, from the risk information acquisition unit 61. In addition, the relative positional relationship determination unit 68 receives positional information of a risk other than the intersection road in the plurality of risks from the risk information acquisition unit 61.

The relative positional relationship determination unit 68 determines a positional relationship between the intersection road and the other risk. For example, it is determined whether or not the distance D between the intersection road and the other risk is within a predetermined range.

The predetermined range may be determined, for example, in accordance with a collision allowance time with respect to the risk. For example, when a time point at which a steering for avoiding a single risk is started is set to a time point at which the collision allowance time is t seconds, the predetermined range may be determined on the basis of the steering start time point.

For example, assuming that a vehicle speed of the host vehicle 70 is V, the predetermined range may be set to a range of from Vt to 2Vt.

The relative positional relationship determination unit 68 outputs a result of the determination to the trajectory generation unit 63.

The priority determination unit 69 receives information on a priority regulation and/or a stop regulation of the host vehicle road from the host vehicle road information acquisition unit 60. Additionally, the priority determination unit 69 receives information on a priority regulation and/or a stop regulation of the intersection road from the intersection road information acquisition unit 64.

The priority determination unit 69 determines a priority order between the intersection road and the host vehicle road, and outputs a result of the determination to the trajectory generation unit 63.

The trajectory generation unit 63 determines whether or not to generate an extended passage trajectory passing the intersection road and the other risk on the basis of the positional relationship between the intersection road and the other risk determined by the relative positional relationship determination unit 68.

For example, the trajectory generation unit 63 may generate an extended passage trajectory passing the intersection road and the other risk when the distance D between the intersection road and the other risk is within the predetermined range.

On the contrary, when the distance D between the intersection road and the other risk is not within the predetermined range, the trajectory generation unit 63 may generate, for example, a travel trajectory in which a travel trajectory passing with the clearance from the intersection road and a travel trajectory passing with the clearance from the parked vehicle are separately formed.

Furthermore, the trajectory generation unit 63 determines whether or not to generate an extended passage trajectory passing the intersection road and the other risk on the basis of whether or not the host vehicle road has priority over the intersection road.

For example, when the host vehicle road has priority over the intersection road, the trajectory generation unit 63 may generate the extended passage trajectory passing the intersection road and the other risk.

On the contrary, when the host vehicle road does not have priority over the intersection road, the trajectory generation unit 63 may generate, for example, a travel trajectory passing by increasing only the clearance from the other risk.

In addition, the trajectory generation unit 63 determines whether or not to generate an extended passage trajectory passing the intersection road and the other risk on the basis of whether or not there is another vehicle that enters the host vehicle road from the intersection road 73.

For example, the trajectory generation unit 63 may generate the extended passage trajectory passing the intersection road and the other risks when there is another vehicle that enters the host vehicle road from the intersection road 73.

On the contrary, when there is no other vehicle that enters the host vehicle road from the intersection road 73, the trajectory generation unit 63 may generate, for example, a travel trajectory passing by increasing only the clearance from the other risk.

(Operation)

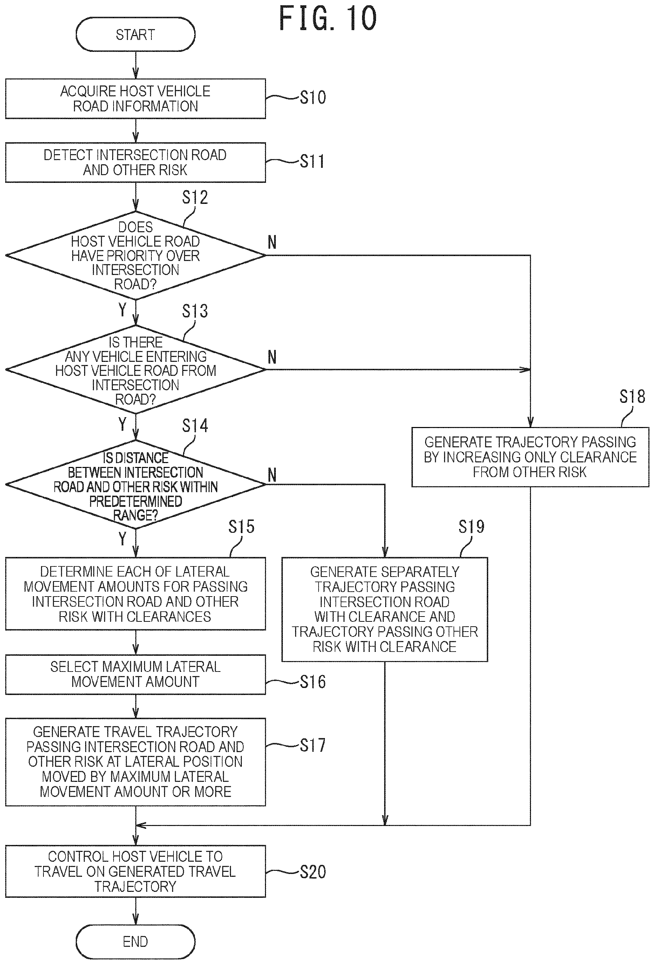

Next, operation of the driving support device 1 in the second embodiment will be described. Reference will be made to FIG. 10.

At step S10, the host vehicle road information acquisition unit 60 acquires host vehicle road information including the information of the priority regulation and/or the stop regulation of the host vehicle road.

At step S11, the intersection road information acquisition unit 64 detects, as a risk, the intersection road that intersects with the host vehicle road on the left side of the host vehicle road and ahead of the path of the host vehicle 70, and acquires intersection road information including the information of the position of the intersection road and the priority regulation and/or the stop regulation thereof. Additionally, the risk information acquisition unit 61 detects another risk present on the left side of the host vehicle road and ahead of the path of the host vehicle 70, and acquires a position of the other risk. When the other risk is an avoidance object, information on a lateral width of the avoidance object may be acquired.

At step S12, the priority determination unit 69 determines whether or not the host vehicle road has priority over the intersection road on the basis of the priority regulations and/or the stop regulations of the host vehicle road and the intersection road.

When the host vehicle road has priority over the intersection road (step S12: Y), processing proceeds to step S13. When the host vehicle road does not have priority over the intersection road (step S12: N), processing proceeds to step S18.

At step S13, the trajectory generation unit 63 determines whether or not there is any other vehicle that enters the host vehicle road from the intersection road.

When there is another vehicle that enters the host vehicle road from the intersection road (step S13: Y), processing proceeds to step S14. When there is no other vehicle that enters the host vehicle road from the intersection road (step S13: N), processing proceeds to step S18.

At step S14, the relative positional relationship determination unit 68 determines whether or not the distance D between the intersection road and the other risk is within a predetermined range. When the distance D is within the predetermined range (step S14: Y), processing proceeds to step S15. When the distance D is not within the predetermined range (step S14: N), processing proceeds to step S19.

At step S15, the lateral movement amount setting unit 66 determines each lateral movement amount of the host vehicle for passing the intersection road and the other risk with clearances from the intersection road and the other risk.

At step S16, the lateral movement amount setting unit 66 selects a maximum lateral movement amount from among the determined lateral movement amounts.

At step S17, the trajectory generation unit 63 generates an extended passage trajectory passing all of the plurality of risks at a lateral position moved by the selected maximum lateral movement amount or more. Then, processing proceeds to step S20.

When the host vehicle road does not have priority over the intersection road (step S12: N) or when there is no other vehicle that enters the host vehicle road from the intersection road (step S13: N), the trajectory generation unit 63 generates, at step S18, a travel trajectory passing by increasing only the clearance from the other risk. Then, processing proceeds to step S20.

When the distance D between the intersection road and the other risk is not within a predetermined range (step S14: N), the trajectory generation unit 63 generates, at step S19, a travel trajectory in which a travel trajectory passing with the clearance from the intersection road and a travel trajectory passing with the clearance from the parked vehicle are separately formed. Then, processing proceeds to step S20.

At step S20, the travel control controller 50 drives the vehicle control actuator group 51 such that the host vehicle 70 travels on the extended passage trajectory generated by the trajectory generation unit 63, thereby causing the host vehicle 70 to automatically travel.

(Effects of Second Embodiment)

(1) The intersection road information acquisition unit 64 detects, as any of the plurality of risks, the intersection road that intersects with the host vehicle road on the left side of the host vehicle road and ahead of the path of the host vehicle. The trajectory generation unit 63 determines whether or not to generate an extended passage trajectory passing the plurality of risks on the basis of a positional relationship between a risk other than the intersection road in the plurality of risks and the intersection road.

This can prevent the host vehicle from continuing to travel on the section between the intersection road and the other risk while maintaining the lateral position (without moving to one side of the road) even after passing the preceding risk when the distance between the intersection road and the other risk is long.

(2) The trajectory generation unit 63 is characterized by generating an extended passage trajectory passing the plurality of risks when the distance D between the other risk and the intersection road is within a predetermined range.

This can prevent the host vehicle from continuing to travel on the section between the intersection road and the other risk while maintaining the lateral position (without moving to one side of the road) even after passing the preceding risk when the distance between the intersection road and the other risk is long.

(3) When the host vehicle road has priority over the intersection road, the trajectory generation unit 63 generates an extended passage trajectory passing the plurality of risks.

When the host vehicle road does not have priority over the intersection road, the host vehicle 70 temporarily stops before entering the intersection, so that it is unnecessary to increase the clearance from the intersection road to pass through the intersection.

Generating the extended passage trajectory when the host vehicle has priority over the intersection road can prevent traveling with an unnecessarily increased clearance from the left side of the host vehicle road.

(4) When there is a vehicle that enters the host vehicle road from the intersection road, the trajectory generation unit 63 generates an extended passage trajectory passing the plurality of risks.

When there is no vehicle that enters the host vehicle road from the intersection road, it is unnecessary to increase the clearance from the intersection road to pass through the intersection.

Generating the extended passage trajectory when there is a vehicle that enters the host vehicle road from the intersection road can prevent traveling with an unnecessarily increased clearance from the left side of the host vehicle road.

(Third Embodiment)

Next, a third embodiment will be described. Usually when there is a risk on the left side of the host vehicle road and ahead of the path of the host vehicle, a steering start position for starting a steering that accompanies passing the risk is set on the basis of the position of the risk.

Note that the steering accompanying when passing the risk may include a steering (i.e., an avoidance steering) for increasing a lateral clearance from the risk before passing the risk and a steering (i.e., a return steering) for returning to an original lateral position after passing the risk.

However, there may be an intersection road near the risk, as in the above description.

In this case, considering a possibility that another vehicle may enter the host vehicle road from the intersection road, it is preferable to pass through the intersection with a clearance from the intersection road.

Thus, to pass through the intersection with the clearance from the intersection road as well as that from the risk, the steering start position needs to be set on the basis of the position of the intersection road.

Here, depending on whether the intersection road is present on the left side or the right side of the host vehicle road, a lateral movement direction in which the clearance from the intersection road is increased is different.

When the intersection road is on the left side of the host vehicle road, the clearance from the intersection road is increased by moving the lateral position of the host vehicle to the right side, as in the other plurality of risks on the left side of the host vehicle road.

On the other hand, when the intersection road is on the right side of the host vehicle road, moving the lateral position of the host vehicle to the right side narrows the clearance from the intersection road. Due to this, it may be impossible to pass with a sufficient clearance from the intersection road.

Thus, in accordance with whether the intersection road intersecting with the host vehicle road ahead of the path of the host vehicle is on the left side or the right side of the host vehicle road, the travel trajectory generation device 2 of the third embodiment switches the steering start position in the extended passage trajectory passing the plurality of risks on the left side of the host vehicle road and ahead of the path of the host vehicle.

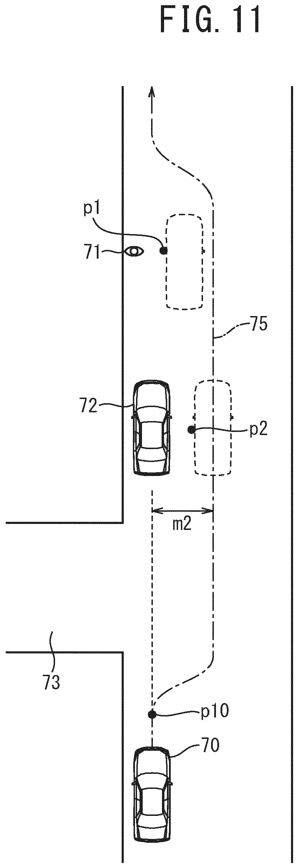

Reference will be made to FIG. 11. For example, when the intersection road 73 is on the left side of the host vehicle road and is closer to the host vehicle 70 than the plurality of risks 71 and 72, the travel trajectory generation device 2 switches the start position of the steering (the avoidance steering) for increasing the lateral clearances from the plurality of risks 71 and 72 before passing the plurality of risks 71 and 72 from the position set on the basis of the risk 72 to a position p10 closer to the host vehicle 70 than the intersection road 73.

In this way, starting the steering for increasing the lateral clearances from the plurality of risks 71 and 72 on the left side of the host vehicle road before passing the intersection road 73 on the left side of the host vehicle road allows for passage with a sufficient clearance from the intersection road 73.

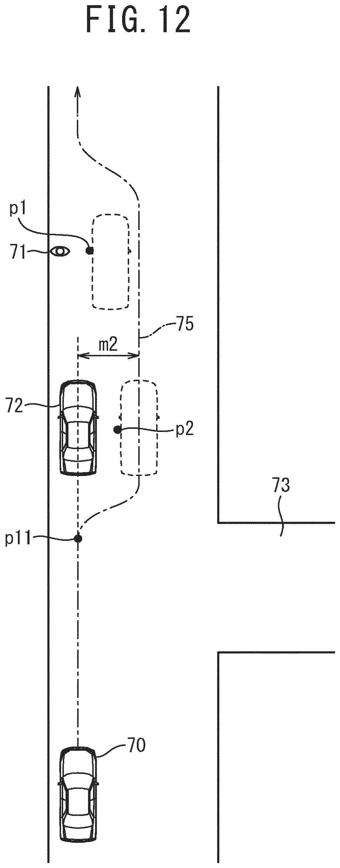

Reference will be made to FIG. 12. When the intersection road 73 is on the right side of the host vehicle road and is closer to the host vehicle 70 than the plurality of risks 71 and 72, the travel trajectory generation device 2 switches the start position of the steering for increasing the lateral clearances from the plurality of risks 71 and 72 before passing the plurality of risks 71 and 72 from the position set on the basis of the risk 72 to a position p11 farther from the host vehicle 70 than the intersection road 73.

In this way, starting the steering for increasing the lateral clearances from the plurality of risks 71 and 72 on the left side of the host vehicle road after passing the intersection road 73 on the right side of the host vehicle road allows for passage with a sufficient clearance from the intersection road 73.

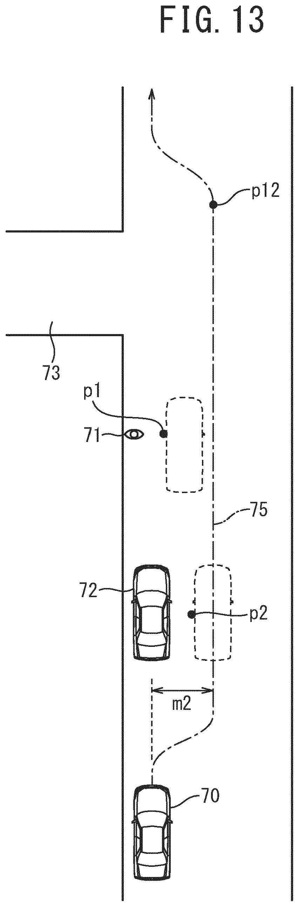

Reference will be made to FIG. 13. For example, when the intersection road 73 is on the left side of the host vehicle road and is farther from the host vehicle 70 than the plurality of risks 71 and 72, the travel trajectory generation device 2 switches the start position of the steering (return steering) for returning to the original lateral position after passing the plurality of risks 71 and 72 from the position set on the basis of the risk 71 to a position p12 farther from the host vehicle 70 than the intersection road 73.

In this way, starting the steering for returning to the original lateral position after passing the intersection road 73 on the left side of the host vehicle road allows for passage with a sufficient clearance from the intersection road 73.

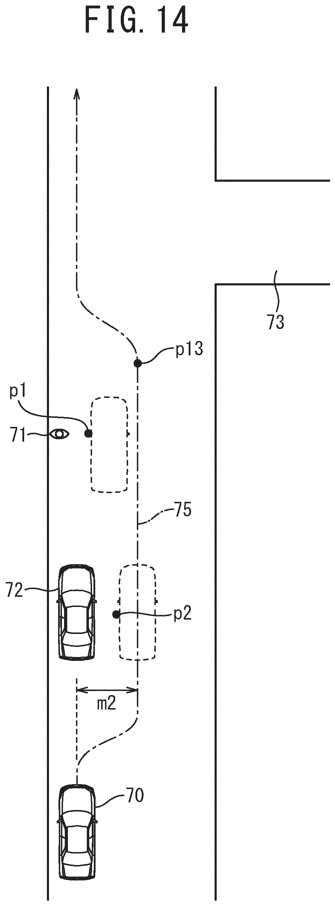

Reference will be made to FIG. 14. For example, when the intersection road 73 is on the right side of the host vehicle road and is farther from the host vehicle 70 than the plurality of risks 71 and 72, the travel trajectory generation device 2 switches the start position of the steering for returning to the original lateral position after passing the plurality of risks 71 and 72 from the position set on the basis of the risk 71 to a position p13 closer to the host vehicle 70 than the intersection road 73.

In this way, starting the steering for returning to the original lateral position before passing the intersection road 73 on the right side of the host vehicle road allows for passage with a sufficient clearance from the intersection road 73.

Note that when the intersection road is on the left side of the host vehicle road (the cases illustrated in FIGS. 11 and 13), the travel trajectory generation device 2 may determine the lateral movement amount of the extended passage trajectory 75 on the basis of not only the lateral movement amounts m1 and m2 determined with respect to the plurality of risks 71 and 72 but also the lateral movement amount m3 determined with respect to the intersection road 73.

In other words, the travel trajectory generation device 2 may generate the extended passage trajectory 75 passing all of the plurality of risks 71 and 72 and the intersection road 73 while maintaining a lateral position moved by an amount equal to or more than the maximum lateral movement amount among the lateral movement amounts m1 to m3.

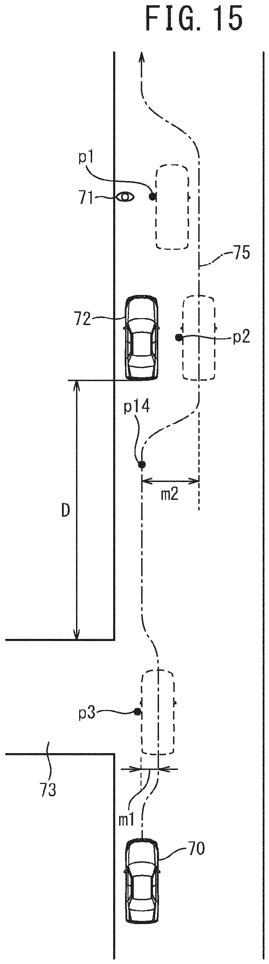

Reference will be made to FIG. 15. When the plurality of risks 71 and 72 and the intersection road 73 are distant from each other, it is not preferable to continue to travel from the intersection road 73 to the plurality of risks 71 and 72 without returning to the left side of the road.

For example, when the distance D between the intersection road 73 and the parked vehicle 72 that is one of the plurality of risks is long, it is not preferable to continue to travel on the section between the intersection road 73 and the parked vehicle 72 while maintaining a lateral position moved by the lateral movement amount m2 or more.

Therefore, on the basis of positional relationships between the intersection road 73 and the plurality of risks 71 and 72, the travel trajectory generation device 2 of the third embodiment determines whether or not to switch the steering start position from the position set on the basis of one of the plurality of risks 71 and 72 to the position set on the basis of the intersection road 73.

For example, when the distance D between the risk 72 closest to the intersection road 73 in the plurality of risks 71 and 72 and the intersection road 73 is within a predetermined range, the travel trajectory generation device 2 switches the steering start position to the position set on the basis of the intersection road 73.

For example, when the intersection road is on the left side of the host vehicle road and the distance D is within the range of from Vt to 2Vt described above, the travel trajectory generation device 2 may switch the steering start position to the position P10 (see FIG. 11) set on the basis of the intersection road 73.

On the other hand, when the distance D is not within the predetermined range, the travel trajectory generation device 2 generates the extended passage trajectory 75 for starting steering from a position p14 (see FIG. 15) set on the basis of the risk 72 closest to the intersection road 73.

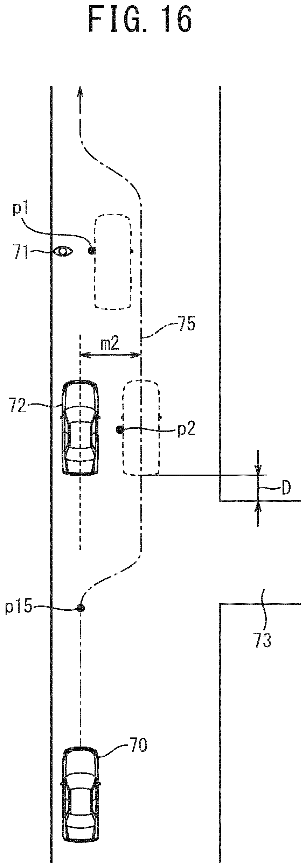

Reference will be made to FIG. 16. When the intersection road 73 is on the right side of the host vehicle road and is close to the plurality of risks 71 and 72, a sudden steering occurs if steering is started after passing the intersection road 73.

Due to that, when the distance D is not within a predetermined range, the travel trajectory generation device 2 generates the extended passage trajectory 75 for starting steering from a position p15 set on the basis of the risk 72 closest to the intersection road 73.

For example, when the intersection road is on the right side of the host vehicle road, the travel trajectory generation device 2 may determine the predetermined range on the basis of a no-parking zone (within 5 m from the intersection) defined in a vicinity of the intersection by law. For example, when the distance D is within a range of from 5 m to Vt, the travel trajectory generation device 2 may switch the steering start position to the position p11 (see FIG. 12) set on the basis of the intersection road 73, and when the distance D is not within the range, may generate the extended passage trajectory 75 for starting steering from the position p15 (see FIG. 16) set on the basis of the risk 72.

FIGS. 15 and 16 illustrate cases where the intersection road 73 is present ahead of the path of the host vehicle 70 and is closer to the host vehicle 70 than the risks 71 and 72. However, the same applies to cases where the intersection road 73 is present ahead of the path of the host vehicle 70 and is farther from the host vehicle 70 than the risks 71 and 72.

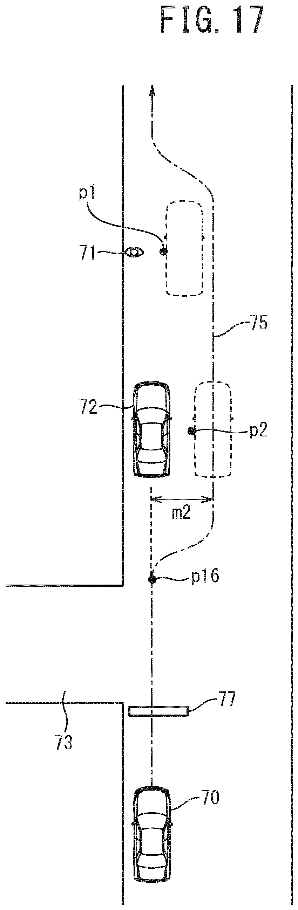

In addition, when the host vehicle road does not have priority over the intersection road 73 (the host vehicle road is not a priority road), the host vehicle 70 temporarily stops before entering the intersection. For example, as illustrated in FIG. 17, when a temporary stop line 77 is provided and the host vehicle road does not have priority over the intersection road 73, the host vehicle 70 stops at the temporary stop line 77. In this case, it is unnecessary to increase the clearance from the intersection road 73 on the left side of the host vehicle road to pass through the intersection.

Still furthermore, even when it is previously known that there is no other vehicle that enters the host vehicle road from the intersection road 73, it is unnecessary to increase the clearance from the intersection road 73 on the left side of the host vehicle road to pass through the intersection.

Thus, when the intersection road 73 on the left side of the host vehicle road is closer to the host vehicle 70 than the plurality of risks 71 and 72 and the host vehicle road has priority over the intersection road 73, the travel trajectory generation device 2 of the third embodiment switches the steering start position to the position p10 (see FIG. 11) closer to the host vehicle 70 than the intersection road 73.

On the other hand, when the intersection road 73 is closer to the host vehicle 70 than the plurality of risks 71 and 72 and the host vehicle road does not have priority over the intersection road 73, the travel trajectory generation device 2 sets a steering start position p16 (see FIG. 17) farther from the host vehicle 70 than the intersection road 73.

In addition, when the intersection road 73 on the left side of the host vehicle road is farther from the host vehicle 70 than the plurality of risks 71 and 72 and the host vehicle road has priority over the intersection road 73, the travel trajectory generation device 2 switches the steering start position to the position p12 (see FIG. 13) farther from the host vehicle 70 than the intersection road 73.

On the other hand, when the intersection road 73 is farther from the host vehicle 70 than the plurality of risks 71 and 72 and the host vehicle road does not have priority over the intersection road 73, the travel trajectory generation device 2 sets a steering start position closer to the host vehicle 70 than the intersection road 73.

Additionally, when the intersection road 73 on the left side of the host vehicle road is closer to the host vehicle 70 than the plurality of risks 71 and 72 and there is another vehicle that enters the host vehicle road from the intersection road 73, the travel trajectory generation device 2 switches the steering start position to a position closer to the host vehicle 70 than the intersection road 73.

On the other hand, when the intersection road 73 is closer to the host vehicle 70 than the plurality of risks 71 and 72 and there is no other vehicle that enters the host vehicle road from the intersection road 73, the travel trajectory generation device 2 sets the steering start position to a position farther from the host vehicle 70 than the intersection road 73.

Furthermore, when the intersection road 73 on the left side of the host vehicle road is farther from the host vehicle 70 than the plurality of risks 71 and 72 and there is another vehicle that enters the host vehicle road from the intersection road 73, the travel trajectory generation device 2 switches the steering start position to a position farther from the host vehicle 70 than the intersection road 73.

On the other hand, when the intersection road 73 is farther from the host vehicle 70 than the plurality of risks 71 and 72 and there is no other vehicle that enters the host vehicle road from the intersection road 73, the travel trajectory generation device 2 sets the steering start position to a position closer to the host vehicle 70 than the intersection road 73.

Next, a description will be given of a functional structure of the controller 40 in the third embodiment. The functional structure of the controller 40 in the third embodiment is the same as the functional structure of the second embodiment illustrated in FIG. 9.

The relative positional relationship determination unit 68 receives positional information of the intersection road 73 that intersects with the host vehicle road on the left side of the host vehicle road and ahead of the path of the host vehicle 70 from the intersection road information acquisition unit 64.

In addition, the relative positional relationship determination unit 68 receives positional information of the plurality of risks 71 and 72 from the risk information acquisition unit 61.

The relative positional relationship determination unit 68 determines positional relationships between the intersection road 73 and the plurality of risks 71 and 72. For example, the relative positional relationship determination unit 68 determines whether or not the distance D between a risk of the plurality of risks 71 and 72 that is closest to the intersection road 73 and the intersection road 73 is within a predetermined range.

The relative positional relationship determination unit 68 outputs a result of the determination to the trajectory generation unit 63.

The priority determination unit 69 determines a priority order between the intersection road and the host vehicle road, and outputs a result of the determination to the trajectory generation unit 63.

On the basis of the positional relationships between the intersection road 73 and the plurality of risks 71 and 72 determined by the relative positional relationship determination unit 68, the trajectory generation unit 63 determines whether or not to switch the steering start position from a position set on the basis of one of the plurality of risks 71 and 72 to a position set on the basis of the intersection road 73.

For example, when the distance D between the risk of the plurality of risks 71 and 72 that is closest to the intersection road 73 and the intersection road 73 is not within a predetermined range, the travel trajectory generation device 2 sets the steering start position on the basis of the risk of the plurality of risks 71 and 72 that is closest to the intersection road 73.

Additionally, when the host vehicle road does not have priority over the intersection road 73, the trajectory generation unit 63 sets the steering start position on the basis of the risk of the plurality of risks 71 and 72 that is closest to the intersection road 73.

In addition, when there is no other vehicle that enters the host vehicle road from the intersection road 73, the trajectory generation unit 63 sets the steering start position on the basis of the risk of the plurality of risks 71 and 72 that is closest to the intersection road 73.

On the other hand, when the distance D between the intersection road 73 and the plurality of risks 71 and 72 is within the predetermined range, the host vehicle road has priority over the intersection road 73, and there is another vehicle that enters the host vehicle road from the intersection road 73, the trajectory generation unit 63 switches the steering start position from the position set on the basis of the risk of the plurality of risks 71 and 72 that is closest to the intersection road 73 to the position set on the basis of the intersection road 73.

When the intersection road 73 is on the left side of the host vehicle road and is closer to the host vehicle 70 than the plurality of risks 71 and 72, the trajectory generation unit 63 switches the start position of the steering for increasing the lateral clearances from the plurality of risks 71 and 72 before passing the plurality of risks 71 and 72 from the position set on the basis of the risk 72 to the position p10 closer to the host vehicle 70 than the intersection road 73 (FIG. 11).

When the intersection road 73 is on the right side of the host vehicle road and is closer to the host vehicle 70 than the plurality of risks 71 and 72, the trajectory generation unit 63 switches the start position of the steering for increasing the lateral clearances from the plurality of risks 71 and 72 before passing the plurality of risks 71 and 72 from the position set on the basis of the risk 72 to the position p11 farther from the host vehicle 70 than the intersection road 73 (FIG. 12).

When the intersection road 73 is on the left side of the host vehicle road and is farther from the host vehicle 70 than the plurality of risks 71 and 72, the trajectory generation unit 63 switches the start position of the steering for returning to the original lateral position after passing the plurality of risks 71 and 72 from the position set on the basis of the risk 71 to the position p12 farther from the host vehicle 70 than the intersection road 73 (FIG. 13).

When the intersection road 73 is on the right side of the host vehicle road and is farther from the host vehicle 70 than the plurality of risks 71 and 72, the trajectory generation unit 63 switches the start position of the steering for returning to the original lateral position after passing the plurality of risks 71 and 72 from the position set on the basis of the risk 71 to the position p13 closer to the host vehicle 70 than the intersection road 73 (FIG. 14).

(Operation)

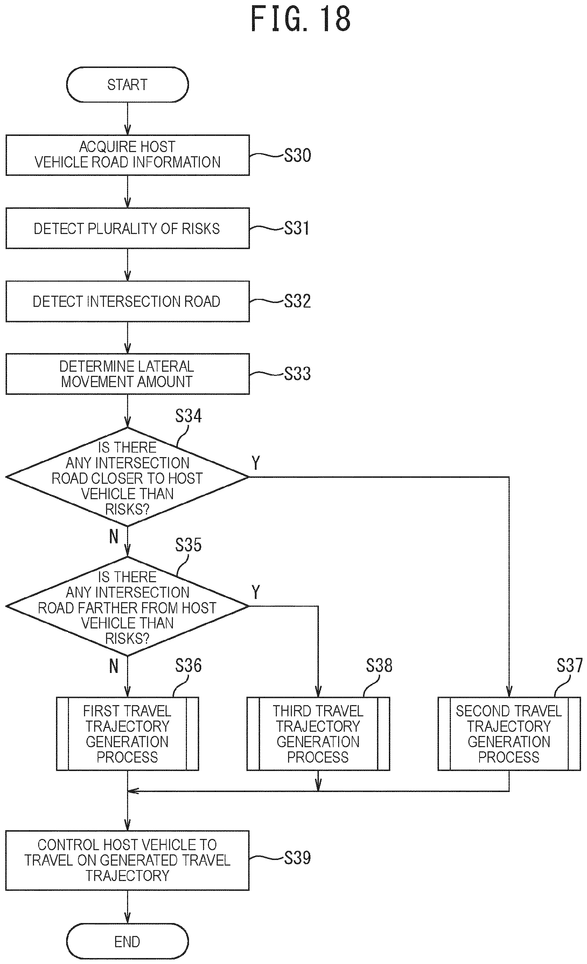

Next, a description will be given of operation of the driving support device 1 in the third embodiment. Reference will be made to FIG. 18.

At step S30, the host vehicle road information acquisition unit 60 acquires host vehicle road information including information of the priority regulation and/or the stop regulation of the host vehicle road.

At step S31, the risk information acquisition unit 61 detects the plurality of risks 71 and 72 present on the left side of the host vehicle road and ahead of the path of the host vehicle 70 to acquire positions of the risks 71 and 72. When the risks are avoidance objects, information of lateral widths of the avoidance objects may be acquired.

At step S32, the intersection road information acquisition unit 64 detects the intersection road 73 that intersects with the host vehicle road ahead of the path of the host vehicle 70, and acquires intersection road information including information of the position of the intersection road 73 and the priority regulation and/or the stop regulation thereof.

At step S33, the lateral movement amount setting unit 66 determines the lateral movement amount m2 of the extended passage trajectory 75 that passes the plurality of risks 71 and 72.

At step S34, the trajectory generation unit 63 determines whether or not there is an intersection road 73 closer to the host vehicle 70 than the plurality of risks 71 and 72.

When there is an intersection road 73 closer to the host vehicle 70 than the plurality of risks 71 and 72 (step S34: Y), processing proceeds to step S37. When there is no intersection road 73 closer to the host vehicle 70 than the plurality of risks 71 and 72 (step S34: N), processing proceeds to step S35.

At step S35, the trajectory generation unit 63 determines whether or not there is an intersection road 73 farther from the host vehicle 70 than the plurality of risks 71 and 72.

When there is an intersection road 73 farther from the host vehicle 70 than the plurality of risks 71 and 72 (step S35: Y), processing proceeds to step S38. When there is no intersection road 73 farther from the host vehicle 70 than the plurality of risks 71 and 72 (step S35: N), processing proceeds to step S36.

At step S36, the trajectory generation unit 63 performs a first travel trajectory generation process. In the first travel trajectory generation process, the trajectory generation unit 63 sets the steering start position on the basis of the risk of the plurality of risks 71 and 72 that is closest to the host vehicle 70. The trajectory generation unit 63 generates the extended passage trajectory 75 that starts the steering that accompanies passing the plurality of risks 71 and 72 at the set steering start position. Then, processing proceeds to step S39.

When there is an intersection road 73 closer to the host vehicle 70 than the plurality of risks 71 and 72 (step S34: Y), the trajectory generation unit 63 performs a second travel trajectory generation process at step S37.

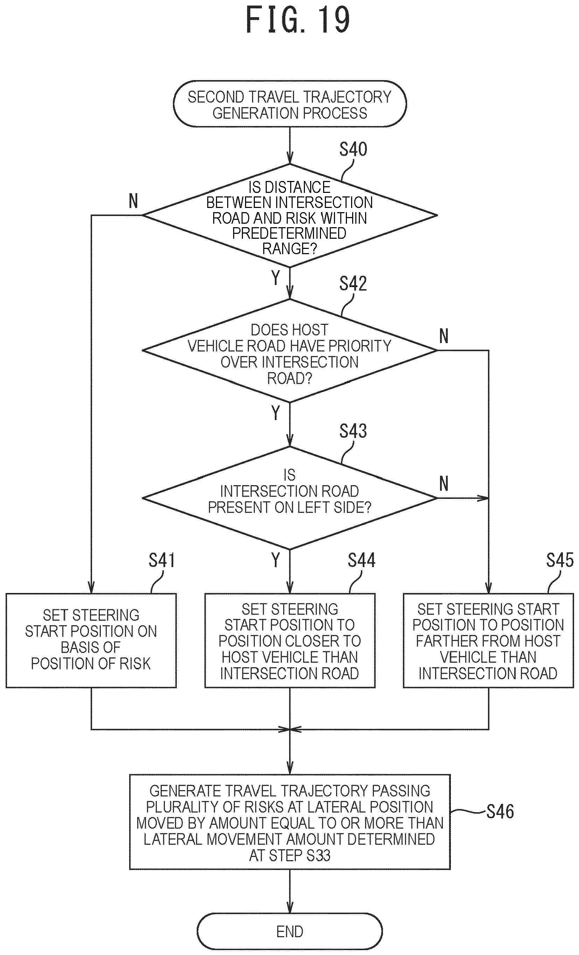

The second travel trajectory generation process will be described with reference to FIG. 19.

At step S40, the relative positional relationship determination unit 68 determines whether or not the distance D between the risk of the plurality of risks 71 and 72 that is closest to the intersection road 73 and the intersection road 73 is within a predetermined range. When the distance D is within the predetermined range (step S40: Y), processing proceeds to step S42. When the distance D is not within the predetermined range (step S40: N), processing proceeds to step S41.

At step S41, the trajectory generation unit 63 sets the steering start position on the basis of the risk of the plurality of risks 71 and 72 that is closest to the intersection road 73. Then, processing proceeds to step S46.

At step S42, the priority determination unit 69 determines whether or not the host vehicle road has priority over the intersection road on the basis of the priority regulations and/or the stop regulations of the host vehicle road and the intersection road. When the host vehicle road has priority over the intersection road (step S42: Y), processing proceeds to step S43. When the host vehicle road does not have priority over the intersection road (step S42: N), processing proceeds to step S45.

At step S43, the trajectory generation unit 63 determines whether or not the intersection road 73 is present on the left side of the host vehicle road. When the intersection road 73 is present on the left side of the host vehicle road (step S43: Y), processing proceeds to step S44. When the intersection road 73 is not present on the left side of the host vehicle road (step S43: N), processing proceeds to step S45.

At step S44, the trajectory generation unit 63 sets the start position of the steering for increasing lateral clearances from the plurality of risks 71 and 72 before passing the plurality of risks 71 and 72 to a position closer to the host vehicle 70 than the intersection road 73. Then, processing proceeds to step S46.

At step S45, the trajectory generation unit 63 sets the start position of the steering for increasing lateral clearances from the plurality of risks 71 and 72 before passing the plurality of risks 71 and 72 to a position farther from the host vehicle 70 than the intersection road 73. Then, processing proceeds to step S46.

At step S46, the trajectory generation unit 63 generates the extended passage trajectory 75 starting the steering that accompanies passing the plurality of risks 71 and 72 at the set steering start position, and passing the plurality of risks 71 and 72 at a lateral position moved by the lateral movement amount m2 or more determined at step S33. Then, the second travel trajectory generation process is ended.

Reference will be made to FIG. 18. When there is an intersection road 73 farther from the host vehicle 70 than the plurality of risks 71 and 72 (step S35: Y), the trajectory generation unit 63 performs a third travel trajectory generation process at step S38.

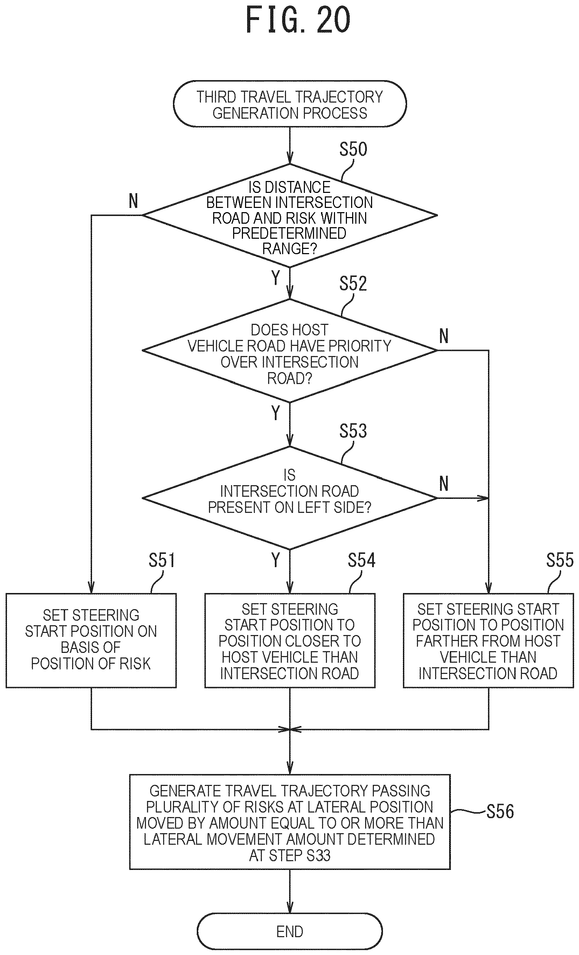

The third travel trajectory generation process will be described with reference to FIG. 20.

At step S50, the relative positional relationship determination unit 68 determines whether or not the distance D between the risk of the plurality of risks 71 and 72 that is closest to the intersection road 73 and the intersection road 73 is within a predetermined range. When the distance D is within the predetermined range (step S50: Y), processing proceeds to step S52. When the distance D is not within the predetermined range (step S50: N), processing proceeds to step S51.

At step S51, the trajectory generation unit 63 sets the steering start position on the basis of the risk of the plurality of risks 71 and 72 that is closest to the intersection road 73. Then, processing proceeds to step S56.

At step S52, the priority determination unit 69 determines whether or not the host vehicle road has priority over the intersection road on the basis of the priority regulations and/or the stop regulations of the host vehicle road and the intersection road. When the host vehicle road has priority over the intersection road (step S52: Y), processing proceeds to step S53. When the host vehicle road does not have priority over the intersection road (step S52: N), processing proceeds to step S55.

At step S53, the trajectory generation unit 63 determines whether or not the intersection road 73 is present on the left side of the host vehicle road. When the intersection road 73 is present on the left side of the host vehicle road (step S53: Y), processing proceeds to step S54. When the intersection road 73 is not present on the left side of the host vehicle road (step S53: N), processing proceeds to step S55.

At step S54, the trajectory generation unit 63 sets the start position of the steering for returning to the original lateral position after passing the plurality of risks 71 and 72 to a position farther from the host vehicle 70 than the intersection road 73. Then, processing proceeds to step S56.

At step S55, the trajectory generation unit 63 sets the start position of the steering for returning to the original lateral position after passing the plurality of risks 71 and 72 to a position closer to the host vehicle 70 than the intersection road 73. Then, processing proceeds to step S56.

Processing at step S56 is the same as the processing at step S46 in FIG. 19. Then, the second travel trajectory generation process is ended.

Reference will be made to FIG. 18. At step S39, the travel control controller 50 drives the vehicle control actuator group 51 such that the host vehicle 70 travels on the extended passage trajectory 75 generated by the trajectory generation unit 63, thereby causing the host vehicle 70 to automatically travel.

(Modifications)

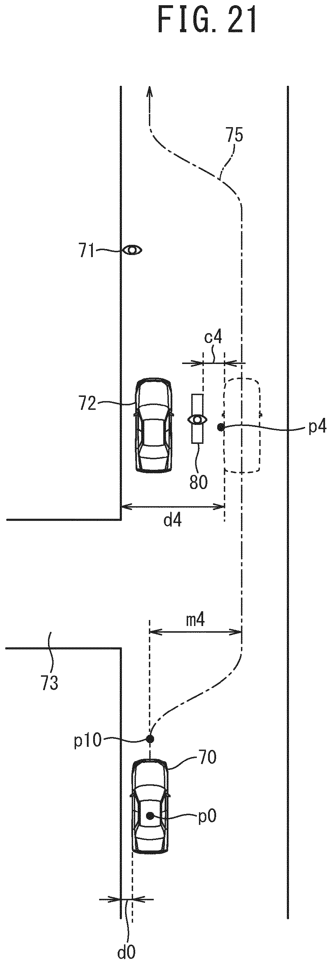

Reference will be made to FIG. 21. The risk information acquisition unit 61 may detect a plurality of risks 72 and 80, respectively, present at the same front and rear positions ahead of the path of the host vehicle 70. For example, the risk 80 is a two-wheeled vehicle that passes a right lateral side of the parked vehicle 72 and overtakes the parked vehicle 72.

Even in this case, the lateral movement amount setting unit 66 calculates a lateral movement amount m4 from the current lateral position p0 of the host vehicle, which is for passing the two-wheeled vehicle 80 with a clearance c4 from the two-wheeled vehicle 80.

When a distance between a lateral position p4 away from the two-wheeled vehicle 80 by the clearance c4 and the road boundary on the left side of the host vehicle road is defined as d4, the lateral movement amount m4 can be determined by m4 = (d4 - d0).

The lateral movement amount setting unit 66 may set, as the lateral movement amount of the extended passage trajectory 75, a maximum lateral movement amount among lateral movement amounts determined with respect to the risks 71 and 72 other than the two-wheeled vehicle 80 and the lateral movement amount m4.

In this case, for example, when traveling on the extended passage trajectory 75 overtaking the two-wheeled vehicle 80, the host vehicle 70 may excessively approach the right side of the host vehicle road. Accordingly, the trajectory generation unit 63 may prohibit generation of the extended passage trajectory 75 when the host vehicle 70 excessively approaches the right side of the host vehicle road (for example, when a right end portion of the host vehicle 70 goes beyond a right side end of the host vehicle road).

(Effects of Third Embodiment)

(1) The trajectory generation unit 63 switches the start position of the steering that accompanies when the host vehicle passes the plurality of risks in accordance with whether the intersection road that intersects with the host vehicle road ahead of the path of the host vehicle is on the left side or the right side of the host vehicle road.
This enables the host vehicle to pass through the intersection with a clearance from the intersection road regardless of whether the intersection road is on the left side or the right side of the host vehicle road.

(2) The trajectory generation unit 63 determines whether or not to switch the start position on the basis of the positional relationships between the intersection road and the plurality of risks.

This can prevent continuous traveling on the section from the intersection road to the plurality of risks without returning to the left side of the road when the distance between the intersection road that is on the left side of the host vehicle road and the plurality of risks is long. In addition, when the intersection road that is on the right side of the host vehicle road and the plurality of risks are close to each other, the occurrence of a sudden steering operation after passing the intersection road can be prevented.

(3) The trajectory generation unit 63 switches the start position when the distance between any risk of the plurality of risks that is closest to the intersection road and the intersection road is within a predetermined range.

This can prevent continuous traveling on the section from the intersection road to the plurality of risks without returning to the left side of the road when the distance between the intersection road that is on the left side of the host vehicle road and the plurality of risks is long. Additionally, when the intersection road that is on the right side of the host vehicle road and the plurality of risks are close to each other, the occurrence of a sudden steering operation after passing the intersection road can be prevented.

(4) The predetermined range is set on the basis of a no-parking zone defined in the vicinity of an intersection by law. In this way, setting the distance defined by law as a lower limit of the predetermined range can prevent the occurrence of a sudden steering operation after passing the intersection road when the intersection road that is on the right side of the host vehicle road and the plurality of risks are close to each other.

(5) The steering that accompanies when the host vehicle passes the plurality of risks is the steering for increasing the lateral clearances from the plurality of risks before passing the plurality of risks. When the intersection road is closer to the host vehicle than the plurality of risks and is on the left side, the trajectory generation unit 63 switches the start position to a position closer to the host vehicle than the intersection road.

In this way, starting the steering for increasing the lateral clearances from the plurality of risks on the left side of the host vehicle road before passing the intersection road on the left side of the host vehicle road allows for passage with a sufficient clearance from the intersection road.

(6) When the steering that accompanies when the host vehicle passes the plurality of risks is the steering for increasing the lateral clearances from the plurality of risks before passing the plurality of risks. When the intersection road is closer to the host vehicle than the plurality of risks and is on the right side, the trajectory generation unit 63 switches the start position to a position farther from the host vehicle than the intersection road.

In this way, starting the steering for increasing the lateral clearances from the plurality of risks on the left side of the host vehicle road after passing the intersection road on the right side of the host vehicle road allows for passage with a sufficient clearance from the intersection road.

(7) When the steering that accompanies when the host vehicle passes the plurality of risks is the steering for returning to the original lateral position after passing the plurality of risks. When the intersection road is farther from the host vehicle than the plurality of risks and is on the left side, the trajectory generation unit 63 switches the start position to a position farther from the host vehicle than the intersection road.

In this way, starting the steering for returning to the original lateral position after passing the intersection road on the left side of the host vehicle road allows for passage with a sufficient clearance from the intersection road.

(8) The steering that accompanies when the host vehicle passes the plurality of risks is the steering for returning to the original lateral position after passing the plurality of risks. When the intersection road is farther from the host vehicle than the plurality of risks and is on the right side, the trajectory generation unit 63 switches the start position to a position closer to the host vehicle than the intersection road.

In this way, starting the steering for returning to the original lateral position before passing the intersection road on the right side of the host vehicle road allows for passage with a sufficient clearance from the intersection road.

(9) When the host vehicle road has priority over the intersection road, the trajectory generation unit 63 switches the steering start position. This can prevent unnecessary switching of the steering start position.

(10) When there is a vehicle that enters the host vehicle road from the intersection road, the trajectory generation unit 63 switches the start position. This can prevent unnecessary switching of the steering start position.

(11) When the intersection road is on the left side of the host vehicle road, the lateral movement amount setting unit 66 determines a lateral movement amount of the host vehicle for passing the intersection road with a clearance from the intersection road. The trajectory generation unit 63 generates, as an extended passage trajectory, a travel trajectory that passes the plurality of risks and the intersection road by moving by a maximum lateral movement amount among lateral movement amounts respectively determined with respect to the plurality of risks and the lateral movement amount determined with respect to the intersection road.

This allows for lateral movement amount determination in consideration of the clearance to be secured from the intersection road on the left side of the host vehicle road as well as those from the plurality of risks.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

Reference Signs List

1: Driving support device
2: Travel trajectory generation device
10: Ambient environment sensor group
11: Range finder
12: Camera
20: Navigation system
21: Navigation controller
22: Positioning device
23: Map database
24: Display unit
25: Operation unit
26: Audio output unit
27: Communication unit
30: Vehicle sensor group
31: Vehicle speed sensor
32: Acceleration sensor
33: Gyro sensor
34: Steering angle sensor
35: Accelerator sensor
36: Brake sensor
40: Controller
41: Processor
42: Storage device
50: Travel control controller
51: Vehicle control actuator group
52: Steering actuator
53: Accelerator position actuator
54: Brake control actuator
60: Host vehicle road information acquisition unit
61: Risk information acquisition unit

62: Vehicle signal acquisition unit
63: Trajectory generation unit
64: Intersection road information acquisition unit
65: Avoidance object information acquisition unit
66: Lateral movement amount setting unit
67: Steering position setting unit
68: Relative positional relationship determination unit
69: Priority determination unit
70: Host vehicle
71: Pedestrian
72: Parked vehicle
73: Intersection road
74 to 76, 78: Travel trajectory
80: Two-wheeled vehicle

**Claims**

1. A travel trajectory generation method comprising:

   detecting a plurality of risks which are respectively present on one side of a left side and a right side of a host vehicle road that is a road on which a host vehicle travels, the one side being close to the host vehicle, and which are at different front and rear positions ahead of a path of the host vehicle;
   determining, in accordance with types of the plurality of risks, each of lateral movement amounts of the host vehicle for avoiding and passing the plurality of risks with clearances from the plurality of risks; and
   generating a travel trajectory avoiding and passing the plurality of risks at a lateral position moved by an amount equal to or more than a maximum lateral movement amount among the determined lateral movement amounts.

2. The travel trajectory generation method according to claim 1, which detects, as any of the plurality of risks, an intersection road that intersects with the host vehicle road on the one side and ahead of the path of the host vehicle, wherein on a basis of a positional relationship between a risk other than the intersection road in the plurality of risks and the intersection road, it is determined whether or not to generate the travel trajectory avoiding and passing the plurality of risks.

3. The travel trajectory generation method according to claim 2, wherein when a distance between the other risk and the intersection road is within a predetermined range, the travel trajectory avoiding and passing the plurality of risks is generated.

**4.** The travel trajectory generation method according to claim 2 or 3, wherein when the host vehicle road has priority over the intersection road, the travel trajectory avoiding and passing the plurality of risks is generated.

**5.** The travel trajectory generation method according to any one of claims 2 to 4, wherein when there is a vehicle that enters the host vehicle road from the intersection road, the travel trajectory avoiding and passing the plurality of risks is generated.

**6.** The travel trajectory generation method according to claim 1, wherein a start position of a steering that accompanies when the host vehicle avoids and passes the plurality of risks is switched in accordance with whether an intersection road that intersects with the host vehicle road ahead of the path of the host vehicle is on the left side or the right side of the host vehicle road.

**7.** The travel trajectory generation method according to claim 6, wherein it is determined whether or not to switch the start position on a basis of a positional relationship between the intersection road and the plurality of risks.

**8.** The travel trajectory generation method according to claim 6, wherein the start position is switched when a distance between any risk of the plurality of risks that is closest to the intersection road and the intersection road is within a predetermined range.

**9.** The travel trajectory generation method according to claim 8, wherein the predetermined range is set on a basis of a no-parking zone defined in a vicinity of an intersection by law.

**10.** The travel trajectory generation method according to any one of claims 6 to 9, wherein the steering that accompanies when the host vehicle avoids and passes the plurality of risks is a steering for increasing lateral clearances from the plurality of risks before passing the plurality of risks, in which when the intersection road is closer to the host vehicle than the plurality of risks and is on the one side, the start position is switched to a position closer to the host vehicle than the intersection road.

**11.** The travel trajectory generation method according to any one of claims 6 to 9, wherein the steering that accompanies when the host vehicle avoids and passes the plurality of risks is a steering for increasing lateral clearances from the plurality of risks before passing the plurality of risks, in which when the intersection road is closer to the host vehicle than the plurality of risks and is on an other side of the left side and the right side of the host vehicle road that is far from the host vehicle, the start position is switched to a position farther from the host vehicle than the intersection road.

**12.** The travel trajectory generation method according to any one of claims 6 to 11, wherein the steering that accompanies when the host vehicle avoids and passes the plurality of risks is a steering for returning to an original lateral position after passing the plurality of risks, in which when the intersection road is farther from the host vehicle than the plurality of risks and is on the one side, the start position is switched to a position farther from the host vehicle than the intersection road.

**13.** The travel trajectory generation method according to any one of claims 6 to 11, wherein the steering that accompanies when the host vehicle avoids and passes the plurality of risks is a steering for returning to an original lateral position after passing the plurality of risks, in which when the intersection road is farther from the host vehicle than the plurality of risks and is on an other side of the left side and the right side of the host vehicle road that is far from the host vehicle, the start position is switched to a position closer to the host vehicle than the intersection road.

**14.** The travel trajectory generation method according to any one of claims 6 to 13, wherein the start position is switched when the host vehicle road has priority over the intersection road.

**15.** The travel trajectory generation method according to any one of claims 6 to 14, wherein the start position is switched when there is a vehicle that enters the host vehicle road from the intersection road.

**16.** The travel trajectory generation method according to any one of claims 6 to 15, wherein when the intersection road is on the one side of the left side and the right side of the host vehicle road that is close to the host vehicle, a lateral movement amount of the host vehicle for passing the intersection road with a clearance from the intersection road is determined, and a travel trajectory passing the plurality of risks and the intersection road by moving by a maximum lateral movement amount among the lateral movement amounts respectively determined with respect to the plurality of risks and the lateral movement amount determined with respect to the intersection road is generated as the travel trajectory avoiding and passing the plurality of risks.

**17.** A travel trajectory generation device comprising:

a sensor configured to detect a plurality of risks which are respectively present on one side of a left side and a right side of a host vehicle road that is a road on which the host vehicle travels, the one side being close to the host vehicle, and which are at different front and rear positions ahead of a path of the host vehicle; and

a controller configured to determine, in accordance with types of the plurality of risks, each of lateral movement amounts of the host vehicle for avoiding and passing the plurality of risks with clearances from the plurality of risks and generate a travel trajectory passing the plurality of risks at a lateral position moved by an amount equal to or more than a maximum lateral movement amount among the determined lateral movement amounts.

# FIG. 1

1

DRIVING SUPPORT DEVICE

2

TRAVEL TRAJECTORY GENERATION DEVICE

10

AMBIENT ENVIRONMENT SENSOR GROUP

RANGE FINDER — 11

CAMERA — 12

20

NAVIGATION SYSTEM

POSITIONING DEVICE — 22

MAP DB — 23

NAVIGATION CONTROLLER — 21

DISPLAY UNIT — 24

OPERATION UNIT — 25

AUDIO OUTPUT UNIT — 26

COMMUNICATION UNIT — 27

CONTROLLER — 40

PROCESSOR — 41

STORAGE DEVICE — 42

TRAVEL CONTROL CONTROLLER — 50

VEHICLE CONTROL ACTUATOR GROUP — 51

STEERING ACTUATOR — 52

ACCELERATOR POSITION ACTUATOR — 53

BRAKE CONTROL ACTUATOR — 54

VEHICLE SENSOR GROUP — 30

VEHICLE SPEED SENSOR — 31

ACCELERATION SENSOR — 32

GYRO SENSOR — 33

STEERING ANGLE SENSOR — 34

ACCELERATOR SENSOR — 35

BRAKE SENSOR — 36

# FIG. 2

# FIG. 3

# FIG. 4

# FIG. 5

CONTROLLER — 40

FROM AMBIENT ENVIRONMENT SENSOR GROUP 10 →

FROM NAVIGATION SYSTEM 20 →

FROM VEHICLE SENSOR GROUP 30 →

HOST VEHICLE ROAD INFORMATION ACQUISITION UNIT — 60

RISK INFORMATION ACQUISITION UNIT — 61

INTERSECTION ROAD INFORMATION ACQUISITION UNIT — 64

AVOIDANCE OBJECT INFORMATION ACQUISITION UNIT — 65

VEHICLE SIGNAL ACQUISITION UNIT — 62

TRAJECTORY GENERATION UNIT — 63

LATERAL MOVEMENT AMOUNT SETTING UNIT — 66

STEERING POSITION SETTING UNIT — 67

TO VEHICLE CONTROL CONTROLLER 50 →

EP 3 819 890 A1

# FIG. 6

```
          START
            │
            ▼
DETECT PLURALITY OF RISKS                        ──S1
            │
            ▼
DETERMINE EACH OF LATERAL MOVEMENT
AMOUNTS FOR PASSING PLURALITY OF RISKS           ──S2
WITH CLEARANCES IN ACCORDANCE WITH
     TYPES OF PLURALITY OF RISKS
            │
            ▼
SELECT MAXIMUM LATERAL MOVEMENT AMOUNT           ──S3
            │
            ▼
GENERATE TRAVEL TRAJECTORY PASSING
PLURALITY OF RISKS AT LATERAL POSITION           ──S4
MOVED BY MAXIMUM LATERAL MOVEMENT
       AMOUNT OR MORE
            │
            ▼
CONTROL HOST VEHICLE TO TRAVEL                   ──S5
ON GENERATED TRAVEL TRAJECTORY
            │
            ▼
          END
```

# FIG. 7

# FIG. 8

# FIG. 9

CONTROLLER — 40

HOST VEHICLE ROAD INFORMATION ACQUISITION UNIT — 60

FROM AMBIENT ENVIRONMENT SENSOR GROUP 10

RISK INFORMATION ACQUISITION UNIT — 61

INTERSECTION ROAD INFORMATION ACQUISITION UNIT — 64

FROM NAVIGATION SYSTEM 20

AVOIDANCE OBJECT INFORMATION ACQUISITION UNIT — 65

FROM VEHICLE SENSOR GROUP 30

VEHICLE SIGNAL ACQUISITION UNIT — 62

RELATIVE POSITIONAL RELATIONSHIP DETERMINATION UNIT — 68

PRIORITY DETERMINATION UNIT — 69

TO VEHICLE CONTROL CONTROLLER 50

TRAJECTORY GENERATION UNIT — 63

LATERAL MOVEMENT AMOUNT SETTING UNIT — 66

STEERING POSITION SETTING UNIT — 67

EP 3 819 890 A1

# FIG. 10

```
                    ( START )
                        │
                        ▼
        ┌───────────────────────────────┐
        │   ACQUIRE HOST VEHICLE        │──S10
        │   ROAD INFORMATION           │
        └───────────────────────────────┘
                        │
                        ▼
        ┌───────────────────────────────┐
        │  DETECT INTERSECTION ROAD     │──S11
        │  AND OTHER RISK               │
        └───────────────────────────────┘
                        │     S12
                        ▼
                  ╱────────────╲
                ╱   DOES         ╲
              ╱ HOST VEHICLE ROAD  ╲  N
             ⟨  HAVE PRIORITY OVER  ⟩────────────────────────┐
              ╲  INTERSECTION      ╱                         │
                ╲   ROAD?        ╱                           │
                  ╲────────────╱                             │
                    Y │    S13                               │
                      ▼                                      │
                  ╱────────────╲                             │
                ╱   IS THERE      ╲                          │
              ╱  ANY VEHICLE ENTERING ╲  N                   │
             ⟨ HOST VEHICLE ROAD FROM  ⟩──────────────────┐  │
              ╲   INTERSECTION       ╱                     │  │
                ╲    ROAD?         ╱                       │  │
                  ╲────────────╱                           │  │
                    Y │    S14                             │  ▼  S18
                      ▼                                    │  ┌──────────────────────┐
                  ╱────────────╲                           │  │ GENERATE TRAJECTORY  │
                ╱  IS DISTANCE    ╲                        │  │ PASSING BY INCREASING│
              ╱ BETWEEN INTERSECTION ╲ N                   │  │ ONLY CLEARANCE FROM  │
             ⟨ ROAD AND OTHER RISK WITHIN⟩────────┐        │  │ OTHER RISK           │
              ╲  PREDETERMINED      ╱              │        │  └──────────────────────┘
                ╲   RANGE?        ╱                │        │         │
                  ╲────────────╱                  │        │         │
                    Y │     S15        S19        ▼        │         │
                      ▼              ┌────────────────────┐│         │
        ┌───────────────────────┐   │ GENERATE SEPARATELY ││         │
        │ DETERMINE EACH OF     │   │ TRAJECTORY PASSING  ││         │
        │ LATERAL MOVEMENT      │   │ INTERSECTION ROAD   ││         │
        │ AMOUNTS FOR PASSING   │   │ WITH CLEARANCE AND  ││         │
        │ INTERSECTION ROAD AND │   │ TRAJECTORY PASSING  ││         │
        │ OTHER RISK WITH       │   │ OTHER RISK WITH     ││         │
        │ CLEARANCES            │   │ CLEARANCE           ││         │
        └───────────────────────┘   └────────────────────┘│         │
                      │                       │            │         │
                      ▼                       │            │         │
        ┌───────────────────────┐             │            │         │
        │ SELECT MAXIMUM LATERAL │──S16        │            │         │
        │ MOVEMENT AMOUNT        │             │            │         │
        └───────────────────────┘             │            │         │
                      │                        │            │         │
                      ▼                        │            │         │
        ┌───────────────────────┐             │            │         │
        │ GENERATE TRAVEL        │──S17        │            │         │
        │ TRAJECTORY PASSING     │             │            │         │
        │ INTERSECTION ROAD AND  │             │            │         │
        │ OTHER RISK AT LATERAL  │             │            │         │
        │ POSITION MOVED BY      │             │            │         │
        │ MAXIMUM LATERAL        │             │            │         │
        │ MOVEMENT AMOUNT OR MORE│             │            │         │
        └───────────────────────┘             │            │         │
                      │◄─────────────────────┴────────────┴─────────┘
                      ▼
        ┌───────────────────────┐
        │ CONTROL HOST VEHICLE   │──S20
        │ TO TRAVEL ON GENERATED │
        │ TRAVEL TRAJECTORY      │
        └───────────────────────┘
                      │
                      ▼
                  ( END )
```

# FIG. 11

# FIG. 12

# FIG. 13

# FIG. 14

# FIG. 15

# FIG. 16

# FIG. 17

# FIG. 18

```
                    ┌─────────────┐
                    │    START    │
                    └──────┬──────┘
                           │
                           ▼
           ┌──────────────────────────┐
           │      ACQUIRE HOST        │ ─── S30
           │ VEHICLE ROAD INFORMATION │
           └────────────┬─────────────┘
                        │
                        ▼
           ┌──────────────────────────┐
           │ DETECT PLURALITY OF RISKS│ ─── S31
           └────────────┬─────────────┘
                        │
                        ▼
           ┌──────────────────────────┐
           │ DETECT INTERSECTION ROAD │ ─── S32
           └────────────┬─────────────┘
                        │
                        ▼
           ┌──────────────────────────┐
           │   DETERMINE LATERAL      │ ─── S33
           │   MOVEMENT AMOUNT        │
           └────────────┬─────────────┘
                        │      S34
                        ▼
               ╱─────────────────╲
              ╱     IS THERE       ╲         Y
             ╱  ANY INTERSECTION    ╲ ──────────────────────┐
             ╲ ROAD CLOSER TO HOST  ╱                       │
              ╲  VEHICLE THAN      ╱                         │
               ╲    RISKS?        ╱                          │
                ╲───────┬────────╱                           │
                       N│    S35                             │
                        ▼                                    │
               ╱─────────────────╲                          │
              ╱     IS THERE       ╲        Y                │
             ╱  ANY INTERSECTION    ╲ ──────────────┐        │
             ╲ ROAD FARTHER FROM HOST╱               │        │
              ╲  VEHICLE THAN      ╱                 │        │
               ╲    RISKS?        ╱                  │        │
                ╲───────┬────────╱                   │        │
                  N│   S36             S38           │   S37  │
                   ▼                    ▼            │    ▼   │
         ┌──────────────┐    ┌──────────────┐    ┌──────────────┐
         ║ FIRST TRAVEL │    ║ THIRD TRAVEL │    ║ SECOND TRAVEL│
         ║ TRAJECTORY   │    ║ TRAJECTORY   │    ║ TRAJECTORY   │
         ║ GENERATION   │    ║ GENERATION   │    ║ GENERATION   │
         ║ PROCESS      │    ║ PROCESS      │    ║ PROCESS      │
         └──────┬───────┘    └──────┬───────┘    └──────┬───────┘
                │◄──────────────────┴───────────────────┘
                ▼
      ┌──────────────────────────┐
      │ CONTROL HOST VEHICLE TO  │ ─── S39
      │ TRAVEL ON GENERATED TRAVEL│
      │ TRAJECTORY               │
      └────────────┬─────────────┘
                   │
                   ▼
             ┌─────────────┐
             │     END     │
             └─────────────┘
```

# FIG. 19

```
        ( SECOND TRAVEL TRAJECTORY )
        (    GENERATION PROCESS     )
                     │
                     │  S40
                     ▼
            ┌──────────────────┐
      N     │   IS DISTANCE    │
◄───────────│ BETWEEN INTERSECTION│
            │ ROAD AND RISK WITHIN│
            │   PREDETERMINED    │
            │      RANGE?        │
            └──────────────────┘
                     │ Y
                     │      S42
                     ▼
            ┌──────────────────┐
            │   DOES HOST       │    N
            │ VEHICLE ROAD HAVE PRIORITY├──────┐
            │  OVER INTERSECTION │
            │      ROAD?         │
            └──────────────────┘
                     │ Y
                     │      S43
                     ▼
            ┌──────────────────┐
            │       IS          │    N
            │ INTERSECTION ROAD  ├──────────►
            │ PRESENT ON LEFT SIDE?│
            └──────────────────┘
                     │ Y
```

| S41 | S44 | S45 |
|-----|-----|-----|
| SET STEERING START POSITION ON BASIS OF POSITION OF RISK | SET STEERING START POSITION TO POSITION CLOSER TO HOST VEHICLE THAN INTERSECTION ROAD | SET STEERING START POSITION TO POSITION FARTHER FROM HOST VEHICLE THAN INTERSECTION ROAD |

```
        ┌────────────────────────────────────┐
        │ GENERATE TRAVEL TRAJECTORY PASSING  │
        │ PLURALITY OF RISKS AT LATERAL POSITION│──── S46
        │ MOVED BY AMOUNT EQUAL TO OR MORE THAN│
        │ LATERAL MOVEMENT AMOUNT DETERMINED   │
        │           AT STEP S33               │
        └────────────────────────────────────┘
                     │
                     ▼
                 (  END  )
```

# FIG. 20

```
        ┌──────────────────────────────┐
        │   THIRD TRAVEL TRAJECTORY    │
        │     GENERATION PROCESS       │
        └──────────────────────────────┘
                      │
                      ▼            S50
                  ╱───────────╲
                 ╱   IS DISTANCE  ╲
         N   ╱  BETWEEN INTERSECTION ╲
    ◄───────╱  ROAD AND RISK WITHIN   ╲
            ╲     PREDETERMINED       ╱
             ╲       RANGE?          ╱
              ╲───────────────────╱
                      │ Y
                      ▼            S52
                  ╱───────────╲
                 ╱   DOES HOST   ╲       N
            ╱ VEHICLE ROAD HAVE PRIORITY ╲────────────┐
            ╲   OVER INTERSECTION       ╱             │
             ╲       ROAD?             ╱              │
              ╲───────────────────╱                  │
                      │ Y                             │
                      ▼            S53                │
                  ╱───────────╲                       │
                 ╱     IS        ╲      N              │
            ╱  INTERSECTION ROAD  ╲─────────────┐     │
            ╲  PRESENT ON LEFT SIDE? ╱          │     │
              ╲───────────────────╱            │     │
                      │ Y                       │     │
```

|   S51   |   S54   |   S55   |
|---------|---------|---------|
| SET STEERING START POSITION ON BASIS OF POSITION OF RISK | SET STEERING START POSITION TO POSITION CLOSER TO HOST VEHICLE THAN INTERSECTION ROAD | SET STEERING START POSITION TO POSITION FARTHER FROM HOST VEHICLE THAN INTERSECTION ROAD |

```
        ┌──────────────────────────────────────────┐
        │  GENERATE TRAVEL TRAJECTORY PASSING       │
        │  PLURALITY OF RISKS AT LATERAL POSITION   │── S56
        │ MOVED BY AMOUNT EQUAL TO OR MORE THAN     │
        │ LATERAL MOVEMENT AMOUNT DETERMINED        │
        │           AT STEP S33                     │
        └──────────────────────────────────────────┘
                      │
                      ▼
                 ┌─────────┐
                 │   END   │
                 └─────────┘
```

# FIG. 21

## INTERNATIONAL SEARCH REPORT

| | International application No. |
| --- | --- |
| | PCT/IB2018/000812 |

### A. CLASSIFICATION OF SUBJECT MATTER
Int. Cl. G08G1/16(2006.01)i

According to International Patent Classification (IPC) or to both national classification and IPC

### B. FIELDS SEARCHED

Minimum documentation searched (classification system followed by classification symbols)
Int. Cl. G08G1/16

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2015-64786 A (HITACHI, LTD.) 09 April 2015, | 1, 17 |
| Y | paragraphs [0098]-[0101], fig. 12 (Family: none) | 2 |
| A | | 3-16 |
| Y | JP 2015-35165 A (HONDA MOTOR CO., LTD.) 19 February 2015, paragraphs [0070], [0071], [0082], fig. 7, 9 & US 2015/0035981 A1, paragraphs [0177], [0189] & EP 2833290 A2 & EP 3217321 A1 | 2 |
| A | JP 2017-224168 A (TOKYO UNIVERSITY OF AGRICULTURE AND TECHNOLOGY) 21 December 2017, entire text, all drawings (Family: none) | 1-17 |

☐ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25.09.2018 | 09.10.2018 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 819 890 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009286279 A